# EUROPEAN PATENT APPLICATION

(11) **EP 4 549 095 A1**
(43) Date of publication of application: **07.05.2025**
(21) Application number: 24210186.3
(22) Date of filing: 31.10.2024
(51) Int. Cl.: B25F 5/00

(54) **POWER TOOL USER INTERFACE**

(30) Priority: 31.10.2023 US 202363594485 P; 12.04.2024 US 202463633325 P; 03.07.2024 US 202463667324 P
(71) Applicant: Milwaukee Electric Tool Corporation, Brookfield, WI 53005 (US)
(72) Inventor: SPECKMAN, Levi D, Elkhorn, 53121 (US); STAWICKI, Matthew J, New Berlin, 53151 (US); CALLEN, Brian T, Wauwatosa, 53226 (US); GORDON, Benjamin, Brookfield, 53005 (US); VEGAS, Alejandro, Menomonee Falls, 53051 (US); WEIS, William Z, Richfield, 53076 (US); PRESTLEY, Brian J, Wauwatosa, 53226 (US)
(74) Representative: Forresters IP LLP

(57) **Abstract**

A power tool includes a housing, a motor, a first user input device, a second user input device, a controller, and a circuit board. The motor is disposed at least partially within the housing. The first input device is partially disposed within the housing and is configured to move along a first axis. The second input device is also partially disposed within the housing and is configured to move along a second axis orthogonal to the first axis. The controller is configured to control an operational characteristic of the motor. The circuit board is connected to the controller. The circuit board includes a first sensor and a second sensor on a first side of the circuit board. The first sensor is configured to sense a plurality of distinct positions of the first user input device. The second sensor is configured to sense a displacement along the second axis.

## Description

### RELATED APPLICATIONS

This application claims the benefit of U.S. Provisional Patent Application No. 63/594,485, filed on October 31, 2023, U.S. Provisional Patent Application No. 63/633,325, filed on April 12, 2024, and U.S. Provisional Patent Application No. 63/667,324, filed on July 3, 2024, the entire content of each of which is hereby incorporated herein by reference.

### FIELD

This disclosure relates to a power tool.

### SUMMARY

Embodiments described herein provide a power tool including a housing, a motor, a first user input device, a second user input device, a controller, and a circuit board. The motor is disposed at least partially within the housing. The first input device is also partially disposed within the housing, and is configured to move along a first axis to a plurality of distinct positions. The second input device is also partially disposed within the housing and is configured to move along a second axis orthogonal to the first axis. The controller is configured to control an operational characteristic of the motor. The circuit board is connected to the controller. The circuit board includes a first sensor and a second sensor both on a first side of the circuit board. The first sensor is configured to sense a plurality of distinct positions of the first user input device. The second sensor is configured to sense a displacement along the second axis of the second user input device.

In some aspects, the first user input device is a multi-position switch, and the first user input device includes a switch body, a first magnetic member, and a first elastic member.

In some aspects, the switch body includes a recess configured to receive the first magnetic member, and the recess faces the first side of the circuit board.

In some aspects, each of the plurality of distinct positions sensed by the first sensor corresponds to an operational mode of the motor.

In some aspects, the second user input device is a trigger of the power tool, and the second user input device includes a second magnetic member and a second elastic member.

In some aspects, the displacement sensed by the second sensor determines an output characteristic of the motor.

In some aspects, the second axis on which the second user input device moves along is orthogonal to the first axis on which the first user input device moves along.

In some aspects, a third sensor is positioned on the first side of the circuit board and adjacent to the first sensor, the third sensor is configured to sense the plurality of distinct positions of the first user input device.

In some aspects, a third sensor is positioned on the first side of the circuit board adjacent to the second sensor, the third sensor configured to sense the displacement along the second axis of the second user input device.

In some aspects, the third sensor generates a binary output based on the displacement of the second user input device along the second axis.

Embodiments described herein provide a power tool including a housing, a motor, a first user input device, a second sure input device, a controller, a first circuit board, and a second circuit board. The first input device is also partially disposed within the housing, and is configured to move along a first axis to a plurality of distinct positions. The second input device is also partially disposed within the housing and is configured to move along a second axis orthogonal to the first axis. The controller is configured to control an operational characteristic of the motor. The controller is mounted to the first circuit board. The second circuit board is electrically connected to the first circuit board and includes a first sensor and a second sensor. The first sensor is configured to sense a plurality of distinct positions of the first user input device. The second sensor is configured to sense displacement along the second axis of the second user input device.

In some aspects, a third sensor is positioned on the second circuit board adjacent to the second sensor, the third sensor is configured to sense the displacement along the second axis of the second user input device.

In some aspects, the third sensor generates a binary output based on the displacement of the second user input device along the second axis.

Embodiments described herein provide a power tool including a housing, a motor, a controller, an input device housing, a first user input device, a second user input device, and a second circuit board. The motor is partially disposed within the housing. The controller is configured to control an operational characteristic of the motor and is mounted on a first circuit board. The first user input device is partially positioned within the input device housing and is displaceable along a first axis. The first user input device includes a first wiper and a trigger magnet. The second input device is partially positioned within the input device housing and is rotatable about a second axis. The second user input device includes a second wiper. The second circuit board is positioned within the input device housing and includes a first non-contact sensor, a plurality of contact rails, a plurality of contact pads, and a second non-contact sensor. The first non-contact sensor is configured to measure if the first input device has been displaced. The plurality of contact rails is configured to engage the first wiper of the first user input device. The plurality of contact pads is configured to engage the second wiper of the second input device. The second non-contact sensor is configured to measure the displacement of the first user input device along the first axis.

In some aspects, the input device housing includes a positioning groove with a plurality of notches.

In some aspects, the second user input device further includes a plurality of positioning balls and a ball spring, and the plurality of positioning balls is located within the positioning groove of the input device housing.

In some aspects, the first wiper of the second user input device is circular and includes a plurality of protrusions configured to engage the plurality of contact pads on the second circuit board.

In some aspects, the non-contact sensor is a digital Hall effect sensor configured to measure a magnetic flux of the trigger magnet as the first user input device is moved along the first axis.

In some aspects, the non-contact sensor is an inductive sensor configured to measure a change in inductance as a metallic target of the first user input device is moved along the first axis.

In some aspects, the sensor includes one or more contact rails configured to engage a second wiper of the first user input device.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other features and aspects of the disclosure will become apparent by consideration of the following detailed description and accompanying drawings.

### BRIEF DESCRIPTION OF THE DRAWINGS

FIG. 1 is a perspective view of a power tool including a first input device and a second input device, according to some embodiments.
FIG. 2A illustrates a cut away side view including the first input device and the second input device of FIG. 1, according to some embodiments.
FIG. 2B is a section view including the first input device and the second input device of FIG. 1, according to some embodiments.
FIG. 3A is a section view including the second input device of FIG. 1 and a circuit board, according to some embodiments.
FIG. 3B is a section view including the second input device of FIG. 1 and an alternate embodiment of a circuit board, according to some embodiments.
FIG. 4 is an alternate section view including the second input device of FIG. 1, according to some embodiments.
FIG. 5 illustrates a cut away perspective view including an embodiment of the second input device, according to some embodiments.
FIG. 6A illustrates a section view including the first input device of FIG. 1 and the second input device of FIG. 5, according to some embodiments.
FIG. 6B is a section view including the second input device of FIG. 5, according to some embodiments.
FIG. 7 is a cut away side view including an embodiment of the first input device, according to some embodiments.
FIG. 8A is a cut away side view including an embodiment of the first input device and a circuit board, according to some embodiments.
FIG. 8B is a schematic representation of the first input device and circuit board of FIG. 8A.
FIG. 9 is a section view including an embodiment of the first input device, according to some embodiments.
FIG. 10 illustrates a block diagram of a controller for the power tool of FIG. 1, according to some embodiments.
FIG. 11 shows a flow chart for a method of receiving and processing signals from sensors to control an operational characteristic of a motor of the power tool of FIG. 1, according to some embodiments.
FIG. 12 shows a flow chart for a method of receiving and processing signals from sensors to control an operational characteristic of a motor of the power tool of FIG. 1, according to some embodiments.
FIG. 13 shows a flow chart for a method of receiving and processing signals from sensors to control the speed of a motor of the power tool of FIG. 1, according to some embodiments.
FIG. 14 is a section view of an input device housing including an embodiment of the first input device and a second input device, according to some embodiments.
FIG. 15 is a cut away perspective view of a bottom of the second input device of FIG. 14, according to some embodiments.
FIG. 16 is a bottom view of the second input device of FIG. 14, according to some embodiments.
FIG. 17 is a section view of the second input device of FIG. 14, according to some embodiments.
FIG. 18 is a perspective view of a switch wiper of the second input device of FIG. 14, according to some embodiments.
FIG. 19A is a top view of a circuit board inside the input device housing of FIG. 14, according to some embodiments.
FIG. 19B is a bottom view of the circuit board of FIG. 19A, according to some embodiments.
FIG. 20A is a bottom view of a circuit board of FIG. 19A and the first input device of FIG. 14 in a first position, according to some embodiments.
FIG. 20B is a bottom view of a circuit board of FIG. 19A and the first input device of FIG. 14 in a second position, according to some embodiments.
FIG. 21 is a section view of a input device housing including an embodiment of the first input device and a second input device, according to some embodiments.
FIG. 22A is a top view of a circuit board inside the input device housing of FIG. 21, according to some embodiments.
FIG. 22B is a bottom view of the circuit board of FIG. 22A, according to some embodiments.
FIG. 23A is a graphical illustration of signals received from a first trigger sensor and a second trigger sensor of the circuit board of FIG. 22A, according to some embodiments.
FIG. 23B is a graphical illustration of the difference between signals received from a first trigger sensor and a second trigger sensor of the circuit board of FIG. 22A, according to some embodiments.
FIG. 24 illustrates a block diagram of a controller for the power tool of FIG. 14 or FIG. 21, according to some embodiments.
FIG. 25 shows a flow chart for a method of receiving and processing signals from sensors to determine the mode of the power tool of FIG. 14 or FIG. 21, according to some embodiments.
FIG. 26 shows a flow chart for a method of receiving and processing signals from sensors to determine the mode of the power tool of FIG. 14 or FIG. 21, according to some embodiments.
FIG. 27 shows a flow chart for a method of receiving and processing signals from sensors to determine the mode of the power tool of FIG. 21, according to some embodiments.

### DETAILED DESCRIPTION

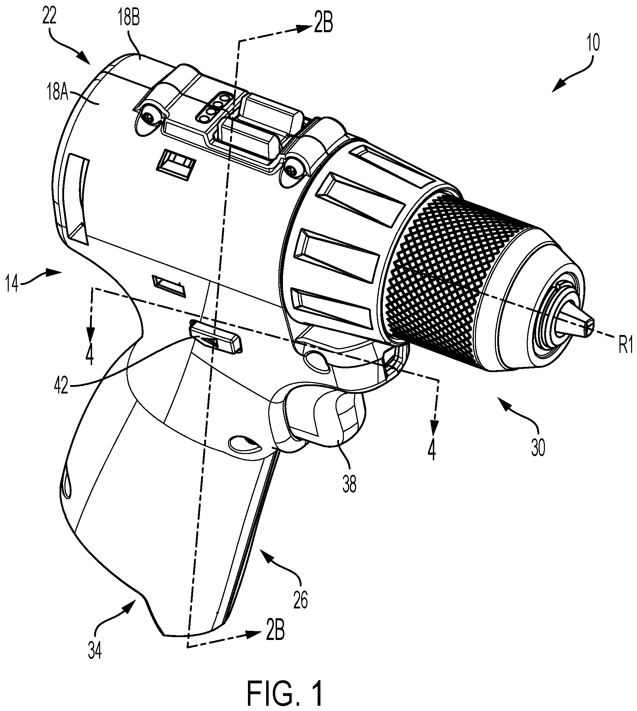

FIG. 1 illustrates a power tool 10 in the form of a rotary tool (e.g., a handheld power drill). The illustrated power tool 10 includes a housing 14 defined by cooperating clamshell halves 18A, 18B. The housing 14 includes a motor housing portion 22, a handle portion 26, and a chuck portion 30. The motor housing portion 22 is configured to enclose a motor (e.g., a brushless DC motor). The handle portion 26 is configured to provide an area for a user to grip while operating the power tool. The handle portion 26 also defines a battery pack receptacle 34 defined at a bottom end. The battery pack receptacle 34 is configured to receive a battery pack, which provides power to the motor. In other embodiments, the power tool 10 may include a power cord for electrically connecting the power tool 10 to a source of AC power. As a further alternative, the power tool 10 may be configured to operate using a different power source (e.g., a pneumatic power source, etc.). The chuck portion 30 is configured to receive and rotate a tool bit (e.g., a drill bit or a screw bit) about a rotational axis R1. The power tool 10 further includes a plurality of user input devices configured to adjust the operational characteristics or performance of the power tool 10. In the illustrated embodiment, the input devices include a first input device or trigger 38 and a second input device or multi-position switch 42.

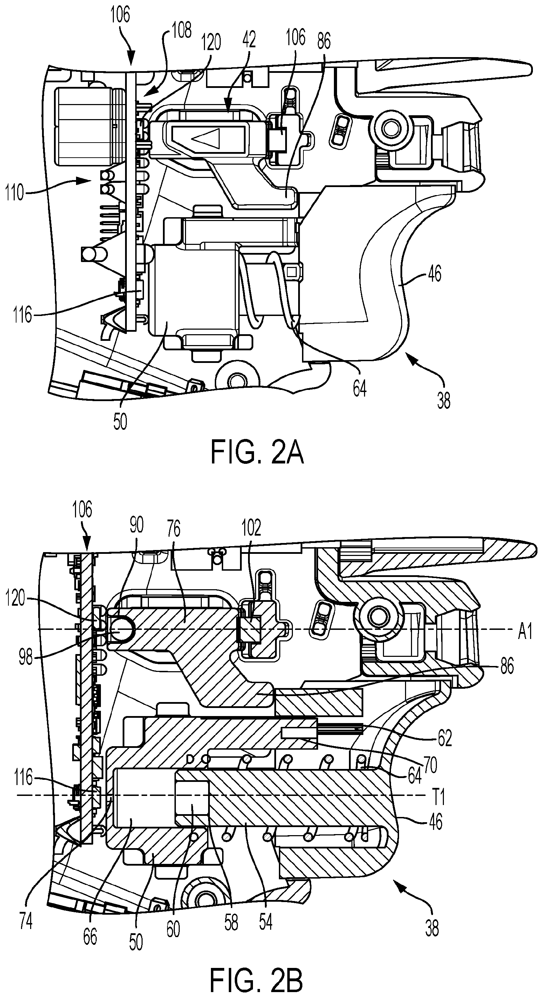

FIGS. 2A-2B illustrate the inside of the housing 14 of the power tool 10 focused on the trigger 38 and the multi-position switch 42. The trigger 38 is configured to command the speed of the motor based on a displacement of the trigger 38 from a home position (FIG. 2A-2B). The trigger 38 includes an actuatable portion 46 and a receiving portion 50. The actuatable portion 46 is positioned partially within the housing 14, and is configured to move along a trigger axis T1, when engaged by the user. The actuatable portion 46 includes a post 54 and a male rail 62. The post 54 includes a first magnet recess 58 configured to receive a first magnet 60. The post 54 is also configured to support an elastic member 64 (e.g., a spring), which biases the actuatable portion 46 always from the housing 14. The receiving portion 50 is positioned within the housing and receives the actuatable portion 46. The receiving portion 50 includes a receptacle 66 and a female rail 70. The receptacle 66 receives the post 54 of the actuatable portion 46 and supports the actuatable portion 46 when moved along the trigger axis T1. The receptacle 66 also includes a pass through 74 fluidly connecting the receptacle 66 with housing 14. The female rail 70 is configured to receive the male rail 62, and supports the actuatable portion 46, when moved along the trigger axis T1.

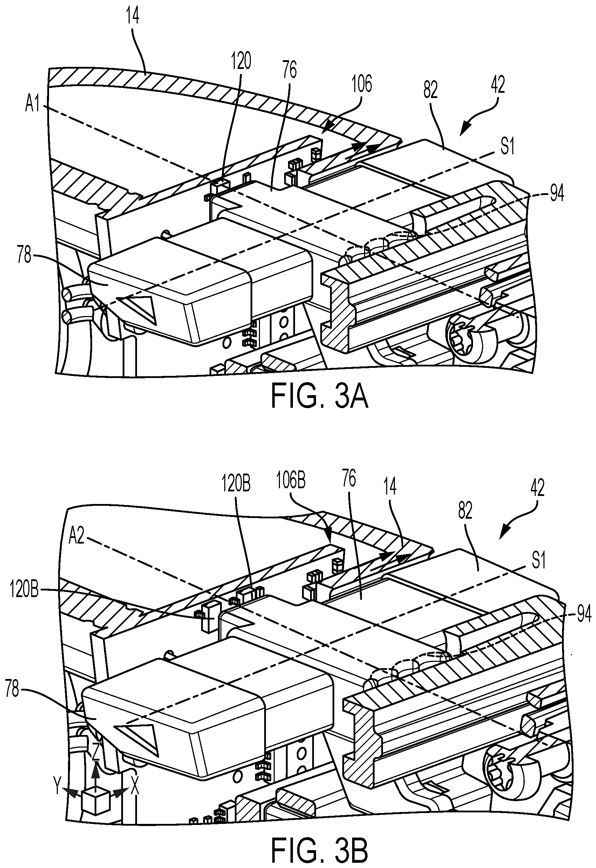

FIGS. 3A-4 illustrate the inside of the housing 14 of the power tool 10 focused on the multi-position switch 42. In the illustrated embodiment, the multi-position switch 42 is configured to move along a switch axis S1 between a forward position, a reverse position, and a neutral position. The switch axis S1 is orthogonal to the trigger axis T1. When the multi-position switch 42 is in the forward position, the motor of the power tool 10 is configured to rotate in a first direction, and when the multi-position switch 42 is in the reverse position, the motor is configured to rotate in a second direction. In the neutral position, the motor cannot be rotated, because the multi-position switch 42 blocks the displacement of the trigger 38. In other embodiments, the positions of the multi-position switch 42 may include greater or fewer than three distinct positions. The multi-position switch 42 includes a switch body 76 with a first end 78, a second end 82, a trigger lockout portion 86 (see FIG. 3A-2B), a second magnet recess 90, and a plurality of positioning grooves 94. The first and second ends 78, 82 extend beyond the housing 14 and are actuatable by the user to move the multi-position switch 42 to any of the three positions (forward, reverse, or neutral). The trigger lockout portion 86 is configured to selectively contact the actuatable portion 46 of the trigger 38 to prevent displacement of the trigger 38 when the multi-position switch 42 is in the neutral position. By preventing the displacement of the trigger 38, the motor of the power tool 10 is prevented from being powered. The second magnet recess 90 is configured to receive a second magnet 98 and carries the second magnet 98 as the multi-position switch 42 is moved between one of the three positions. The second magnet recess 90 is formed on a protrusion extending orthogonally from the remainder of the switch body 76 and faces a circuit board 106.

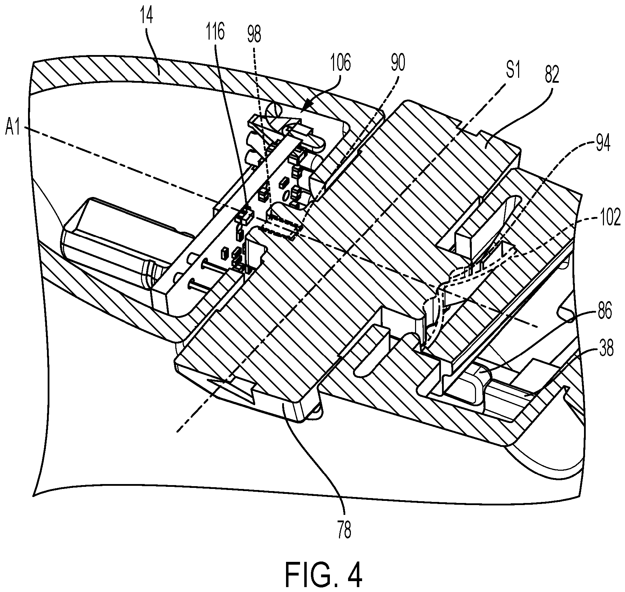

As shown in FIG. 4, a leaf spring 102 engages at least one of the positioning grooves 94 to hold the multi-position switch 42 in one of the three positions. In FIG. 4, the multi-position switch 42 is held in the neutral position, where the trigger lockout portion 86 prevents the actuation of the trigger 38. To transition from the neutral position shown in FIG. 4 to either the forward or reverse positions, the user applies a force to either end 78, 82 of the multi-position switch 42. Initially, the leaf spring 102 resists the movement of the multi-position switch 42. However, once the user applies a great enough force on either the first or second end 78, 82 of the multi-position switch 42, the leaf spring 102 deforms, allowing the multi-position switch 42 to move to the new position. In the illustrated embodiment, there are three positioning grooves 94 corresponding to the forward, reverse, and neutral positions of the multi-position switch 42. In other embodiments, the number of positioning grooves 94 may increase to match the number of positions of the multi-position switch 42.

FIGS. 2A-B, 3A, and 4 illustrate the circuit board 106 positioned within the housing 14. The circuit board 106 includes a first side 108 facing the trigger 38 and the multi-position switch 42, and a second side 110 opposing the first side 108. The first side 108 of the circuit board 106 includes a first sensor or trigger sensor 116 and a second sensor or multi-position switch sensor 120. In the illustrated embodiment, both sensors 116, 120 are digital Hall effects sensors. The digital Hall effect sensors can be configured, for example, to output a pulse-width modulated ("PWM") signal based on an amount of sensed magnetic flux. In other embodiments, the sensors 116, 120 may be analog Hall effects sensors or other types of non-contact sensors. In the embodiment shown, the trigger sensor 116 is configured to sense the degree to which the trigger 38 is depressed (e.g., not depressed, fully depressed, 75% depressed, etc.). The trigger sensor 116 senses the position of the trigger by measuring a change in magnetic flux when the first magnet 60 of the trigger 38 is moved toward or away from the trigger sensor 116. In the embodiment shown in FIG. 3A, the multi-position switch sensor 120 senses the magnetic flux of the second magnet 98 along a sensing axis A1 at each of the three positions of the multi-position switch 42. In some embodiments, the sensing axis A1 extends through the multi-position switch sensor 120 and is orthogonal to the switch axis S1. For descriptive and/or practical purposes, the trigger sensor 116 and the circuit board 106 can be considered part of the trigger 38. However, the circuit board 106 and the trigger sensor 116 can alternatively be considered as separate components. Similarly, for descriptive and/or practical purposes, the multi-position switch sensor 120 and the circuit board 106 can be considered part of the multi-position switch 42. However, the circuit board 106 and the multi-position switch sensor 120 can alternatively be considered as separate components.

FIG. 3B illustrates an alternate embodiment of a circuit board 106B, which includes a set of multi-position switch sensors 120B (e.g., a second sensor and a third sensor). In the illustrated embodiment, the multi-position switch sensors 120B are digital Hall effects sensors, and are configured to measure the magnetic flux of the second magnet 98 along a sensing axis A2, when the multi-position switch 42 is moved to any of the three positions. In some embodiments, the sensing axis A2 extends through the circuit board 106B and is orthogonal to the switch axis S1. The digital Hall effect sensors can be configured, for example, to output a pulse-width modulated ("PWM") signal based on an amount of sensed magnetic flux. In other embodiments, the sensors 120B may be analog Hall effects sensors or other types of non-contact sensors. For descriptive and/or practical purposes, the multi-position switch sensors 120B and the circuit board 106B can be considered part of the multi-position switch 42. However, the circuit board 106B and the multi-position switch sensors 120B can alternatively be considered as separate components.

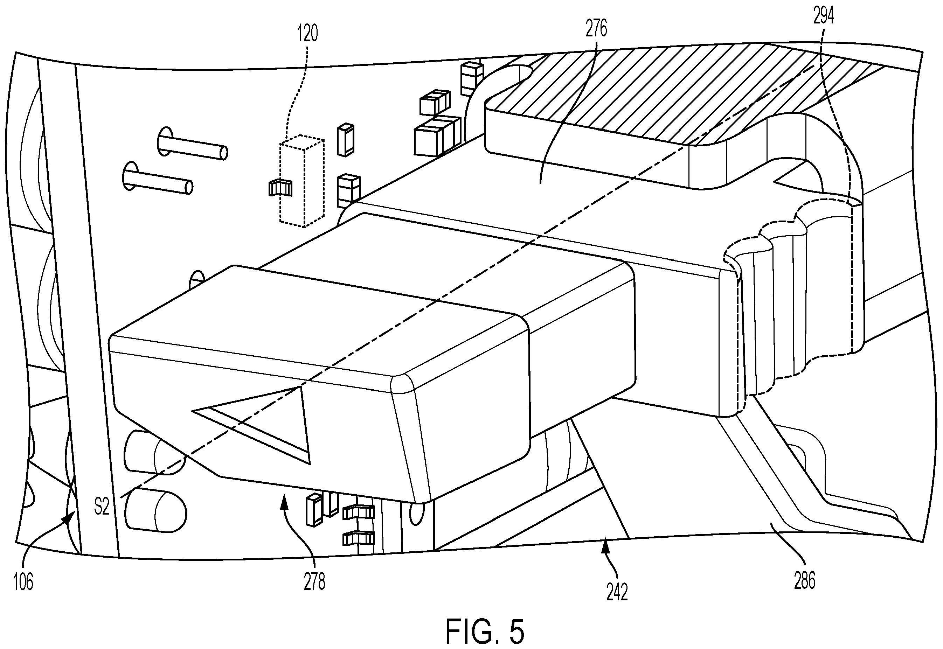

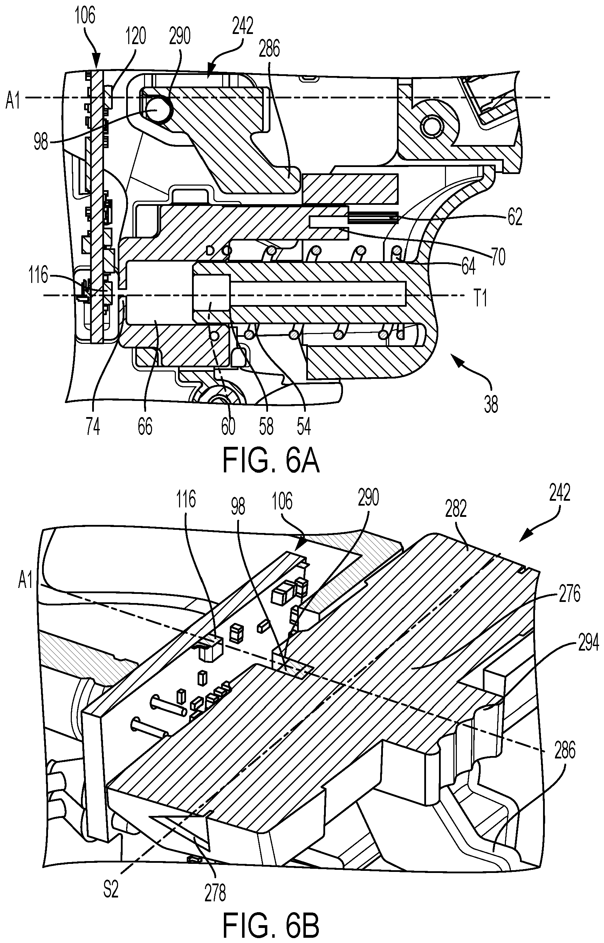

FIG. 5-6B illustrates an embodiment of a multi-position switch 242, with like parts to the multi-position switch 42. The illustrated embodiment in FIGS. 5-6B having like reference numerals plus "200," and the differences are explained below. The multi-position switch 242 is configured to be moveable along a switch axis S2 between two or more distinct positions with respect to the multi-position switch sensor 120. In the illustrated embodiment, the multi-position switch 242 includes three distinct positions (e.g., a forward position, a reverse position, and a neutral position). The multi-position switch 242 includes a switch body 276 with a first end 278, a second end 282, a trigger lockout portion 286 (see FIG. 6A-B), a second magnet recess 290, and a plurality of positioning grooves 294. As shown in FIGS. 6A-B, the second magnet recess 290 is configured to receive the second magnet 98 and carries the second magnet 98 as the multi-position switch 242 is moved between one of the three positions. Compared to the second magnet recess 90, the second magnet recess 290 is not formed on a protrusion, but instead directly into the switch body 276. Additionally, the shape of the second magnet recess 290 allows a larger portion of the second magnet 98 to be exposed to the multi-position sensor 120, compared to the shape of the second magnet recess 90.

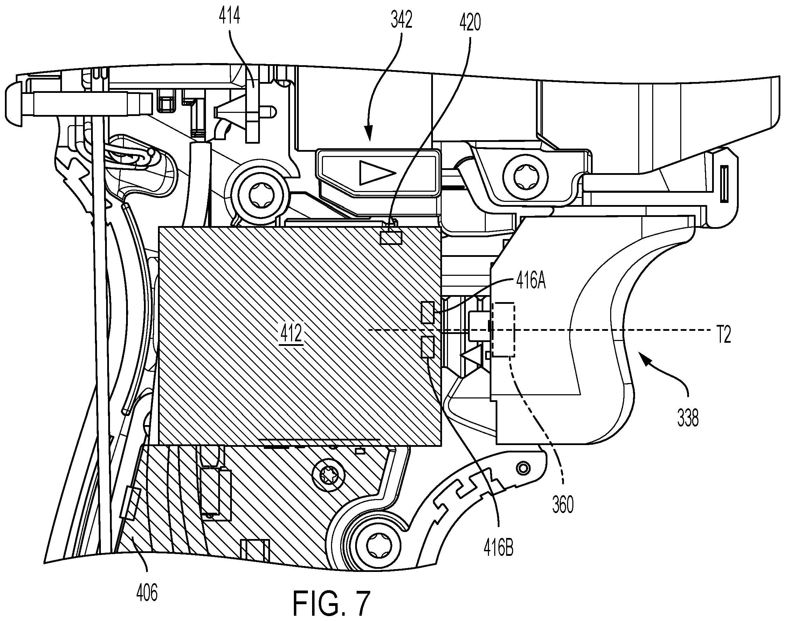

FIG. 7 illustrates another embodiment of a trigger 338 and a multi-position switch 342, with like parts to the trigger 38 and the multi-position switch 42. The illustrated embodiment in FIG. 7 having like reference numeral plus "300," and the differences are explained below. The trigger 338 is moveable along a trigger axis T2 by the user and includes a trigger magnet 360 imbedded within the trigger 338.

FIG. 7 also illustrates a circuit board 412 is positioned parallel to the plane created by 2B (see FIG. 1). In some embodiments, the circuit board 412 is an extension of a main circuit board 406 and is therefore part of the main circuit board 406 (e.g., integral to the main circuit board 406 and coplanar with the main circuit board 406). The main circuit board 406 is separate from a motor circuit board 414 that includes, for example, a plurality of Hall effect sensors for detection rotor position. In some embodiments, the circuit board 412 is mechanically separated from the main circuit board 406 and the motor circuit board 414, but is electrically connected to the main circuit board 406.

In the illustrated embodiment, the circuit board 412 includes a first trigger sensor 416A, a second trigger sensor 416B adjacent the first trigger sensor 416A, and a multi-position switch sensor 420. In other embodiments, the circuit board 412 includes an additional multi-position switch sensor. The sensors 416A, 416B, and 420 are, for example, digital Hall effect sensors and can be configured to output a signal (e.g., a pulse-width modulated ["PWM"] signal) based on an amount of sensed magnetic flux. In other embodiments, the sensors 416A, 416B, 420 may be analog Hall effect sensors or other types of non-contact sensors. In the embodiment shown, the first trigger sensor 416A and the second trigger sensor 416B both sense the degree to which the trigger 338 is depressed. More specifically, the first trigger sensor 416A only determines whether the trigger 338 has been depressed to any degree and outputs a binary output of the state of the trigger (depressed or not depressed). The second trigger sensor 416B senses the specific degree to which the trigger 338 has been depressed (e.g., 25% depressed, 50% depressed, 75% depressed, etc.). The trigger sensors 416A, 416B output their signals based on the change of magnetic flux when the trigger magnet 360 is moved relative to the trigger sensors 416A, 416B. The multi-position sensor 420 measures the position of a multi-position switch 342 in a similar manner to the previously described embodiment illustrated in FIG 3A.

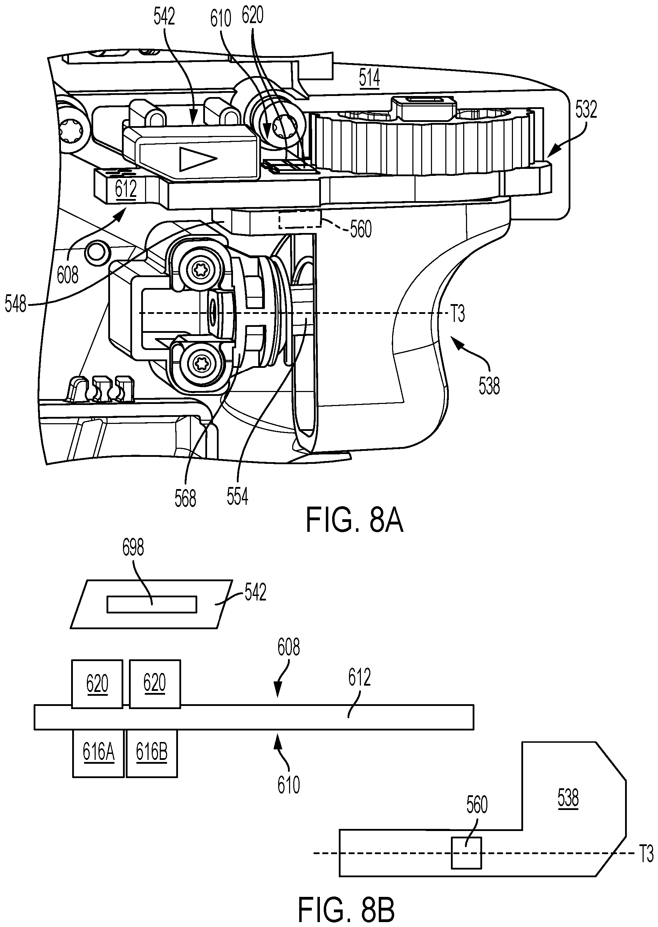

FIG. 8A-8B illustrate another embodiment of a trigger 538 and a multi-position switch 542, with like parts to the trigger 38 and the multi-position switch 42. The illustrated embodiment in FIGS. 8A-B having like reference numeral plus "500," and the differences are explained below. The trigger 538 includes a magnet 560 positioned on, for example, a cantilevered portion 548 and/or a post 554. The post 554 is received in a support bracket 568, which supports the linear motion of the trigger 538 along the trigger axis T3. The embodiment illustrated in FIGS. 8A-8B also includes a circuit board 612 electrically connected to and mechanically separated from a main circuit board of the power tool 10. The circuit board 612 is also mechanically separate from a Hall effect sensor board of the power tool 10. The circuit board 612 can be oriented substantially perpendicularly to both the main circuit board and the Hall effect sensor board of the power tool 10. In some embodiments, the circuit board 612 is positioned within a notch 532 formed in the housing 514 and is positioned in-between the trigger 538 and the multi-position switch 542. The circuit board 612 includes a first side 608 facing the trigger 538 and a second side 610 facing the multi-position switch 542. As shown in FIG. 8B, the first side 608 includes a set of multi-position switch sensors 620 able to sense the position of the multi-position switch 542 by measuring the change in magnetic flux as the multi-position switch magnet 698 is moved, as described previously with respect to the embodiment illustrated in FIG. 3B. In other embodiments, the first side of the circuit board 612 may include a single multi-position sensor and may function as described previously with respect to the embodiment illustrated in FIG. 3A. As shown in FIG. 8B, the second side 610 includes a first trigger sensor 616A and a second trigger sensor 616B. Like the embodiment shown in FIG. 7, the first trigger sensor 616A only determines whether the trigger 538 has been depressed to any degree and outputs a binary output of the state of the trigger 538 (depressed or not depressed). Also, like the embodiment shown in FIG. 7, the second trigger sensor 616B determines the specific degree to which the trigger 538 has been depressed (e.g., 25% depressed, 50% depressed, 75% depressed, etc.).

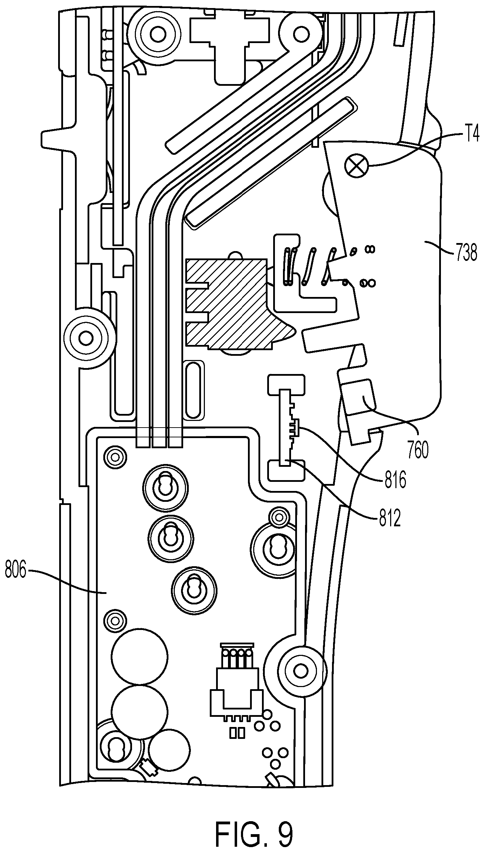

FIG. 9 illustrates another embodiment of a trigger 738, with like parts to the trigger 38. The illustrated embodiment in FIG. 9 having like reference numerals plus "700," and the differences are explained below. The trigger 738 is pivotable about a trigger axis T4 and includes a trigger magnet 760. The embodiment illustrated in FIG. 9 also includes a circuit board 812 electrically connected to but separated from a main circuit board 806. The circuit board 812 includes a trigger sensor 816 able to sense the degree to which the trigger 738 is depressed, by measuring the change in magnetic flux as the trigger magnet 760 moves relative to the trigger sensor 816. In some embodiments, the circuit board 812 includes more than one trigger sensor, as described in the embodiments shown in FIGS. 7-8B. In the illustrated embodiment, the circuit board 812 is perpendicular to the main circuit board 806. The trigger 738 can be used in place of any of the other triggers or user inputs described herein.

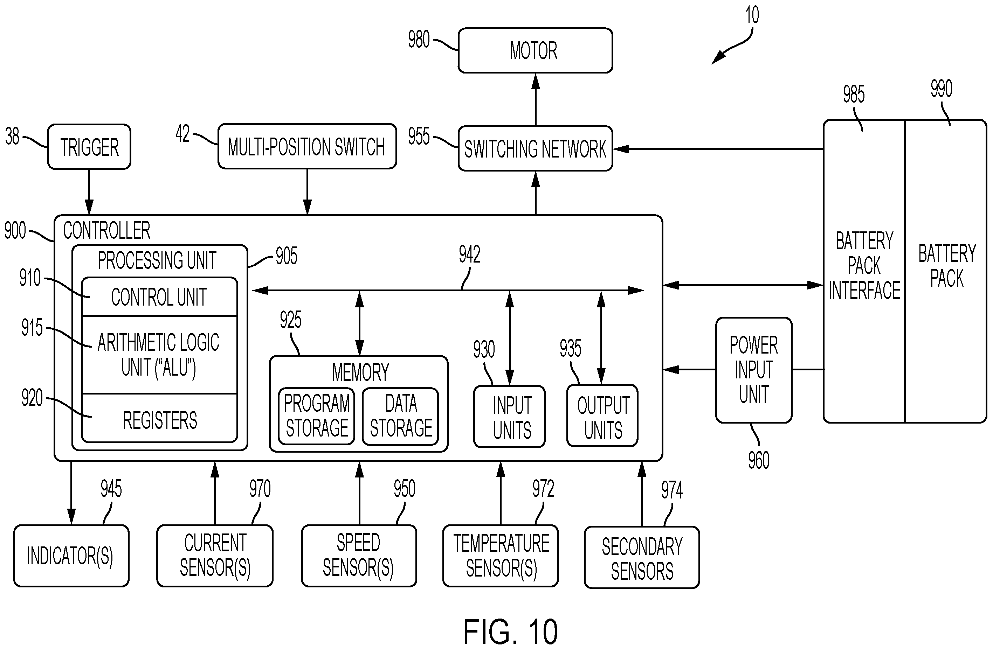

A controller 900 for the power tool 10 is illustrated in FIG. 10. The controller 900 is electrically and/or communicatively connected to a variety of modules or components of the power tool 10. For example, the illustrated controller 900 is connected to indicators 945, current sensor(s) 970, speed sensor(s) 950, temperature sensor(s) 972, secondary sensor(s) 974 (e.g., a voltage sensor, an accelerometer, a torque sensor or torque transducer, etc.), the trigger 38/338/538/738, the multi-position switch 42/242/342/542, a power switching network 955, and a power input unit 960.

The controller 900 includes a plurality of electrical and electronic components that provide power, operational control, and protection to the components and modules within the controller 900 and/or power tool 10. For example, the controller 900 includes, among other things, a processing unit 905 (e.g., a microprocessor, an electronic processor, an electronic controller, a microcontroller, or another suitable programmable device), a memory 925, input units 930, and output units 935. The processing unit 905 includes, among other things, a control unit 910, an arithmetic logic unit ("ALU") 915, and a plurality of registers 920 (shown as a group of registers in FIG. 10) and is implemented using a known computer architecture (e.g., a modified Harvard architecture, a von Neumann architecture, etc.). The processing unit 905, the memory 925, the input units 930, and the output units 935, as well as the various modules connected to the controller 900 are connected by one or more control and/or data buses (e.g., common bus 942). The control and/or data buses are shown generally in FIG. 10 for illustrative purposes. The use of one or more control and/or data buses for the interconnection between and communication among the various modules and components would be known to a person skilled in the art in view of the embodiments described herein.

The memory 925 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 905 is connected to the memory 925 and executes software instructions that are capable of being stored in a RAM of the memory 925 (e.g., during execution), a ROM of the memory 925 (e.g., on a generally permanent basis), or another non-transitory computer readable medium such as another memory or a disc. Software included in the implementation of the power tool 10 can be stored in the memory 925 of the controller 900. The software includes, for example, firmware, one or more applications, program data, filters, rules, one or more program modules, and other executable instructions. The controller 900 is configured to retrieve from the memory 925 and execute, among other things, instructions related to the control processes and methods described herein. In other embodiments, the controller 900 includes additional, fewer, or different components.

The controller 900 drives a motor 980 to rotate an output (e.g., a driver) in response to a user's actuation of the trigger 38/338/538/738. The direction in which the driver rotates the motor 980 corresponds to the current position of the multi-position switch 42/242/342/542. The output may be coupled to the motor 980 via an output shaft. Depression of the trigger 38/338/538/738 changes the magnetic flux sensed by the trigger sensor 116. When the change in magnetic flux sensed by the trigger sensor 116 exceeds a minimum threshold (e.g., some amount of depression), the magnetic flux of the multi-position switch sensor 120 is measured. Based on the measured magnetic fluxes of the sensors 116, 120, a signal is sent to the controller 900 to drive the motor 980 at a specific speed and in a specific direction. In the embodiments shown FIGS. 7-8B, a first trigger sensor 416A or 616A determines if the magnetic flux exceeds a minimum threshold (e.g., some amount of depression) and a second trigger sensor determines 416B or 616B measures the specific magnetic flux to determine a specific speed at which the motor 980 should rotate. In some embodiments, the controller 900 controls the power switching network 955 (e.g., a FET switching bridge) to drive the motor 980. For example, the power switching network 955 may include a plurality of high side switching elements (e.g., FETs) and a plurality of low side switching elements (e.g., FETs). The controller 900 may control each switch of the plurality of high side switching elements and the plurality of low side switching elements to drive each phase of the motor 980. For example, the power switching network 955 may be controlled to more quickly deaccelerate the motor 980. In some embodiments, the controller 900 monitors a rotation of the motor 980 (e.g., a rotational rate of the motor 980, a velocity of the motor 980, a position of the motor 980, a rotational direction of the motor 980, and the like) via the speed sensors 950. The motor 980 may be configured to drive a gearbox (e.g., a mechanism).

The indicators 945 are also connected to the controller 900 and receive control signals from the controller 900 to turn on and off or otherwise convey information based on different states of the power tool 10. The indicators 945 include, for example, one or more light-emitting diodes (LEDs), or a display screen. The indicators 945 can be configured to display conditions of, or information associated with, the power tool 10. For example, the indicators 945 can display information relating to an operational state of the power tool 10, such as a mode or speed setting. The indicators 945 may also display information relating to a fault condition, or other abnormality of the power tool 10. In addition to or in place of visual indicators, the indicators 945 may also include a speaker or a tactile feedback mechanism to convey information to a user through audible or tactile outputs.

A battery pack interface 985 is connected to the controller 900 and is configured to couple with a battery pack 990. The battery pack interface 985 includes a combination of mechanical (e.g., a battery pack receiving portion) and electrical components configured to and operable for interfacing (e.g., mechanically, electrically, and communicatively connecting) the power tool 10 with the battery pack 990. The battery pack interface 985 is coupled to the power input unit 960. The battery pack interface 985 transmits the power received from the battery pack 990 to the power input unit 960. The power input unit 960 includes active and/or passive components (e.g., voltage step-down controllers, voltage converters, rectifiers, filters, etc.) to regulate or control the power received through the battery pack interface 985 and to the controller 900. In some embodiments, the battery pack interface 985 is also coupled to the power switching network 955. The operation of the power switching network 955, as controlled by the controller 900, determines how power is supplied to the motor 980.

The current sensor 970 senses a current provided by the battery pack 990, a current associated with the motor 980, or a combination thereof. In some embodiments, the current sensor 970 senses at least one of the phase currents of the motor 980. The current sensor 970 may be, for example, an inline phase current sensor, a pulse-width-modulation-center-sampled inverter bus current sensor, or the like. The speed sensors 950 sense a speed of the motor 980. The speed sensor 950 may include, for example, one or more Hall effect sensors. In some embodiments, the temperature sensor 972 senses a temperature of the switching network 955, the battery pack 990, the motor 980, or a combination thereof.

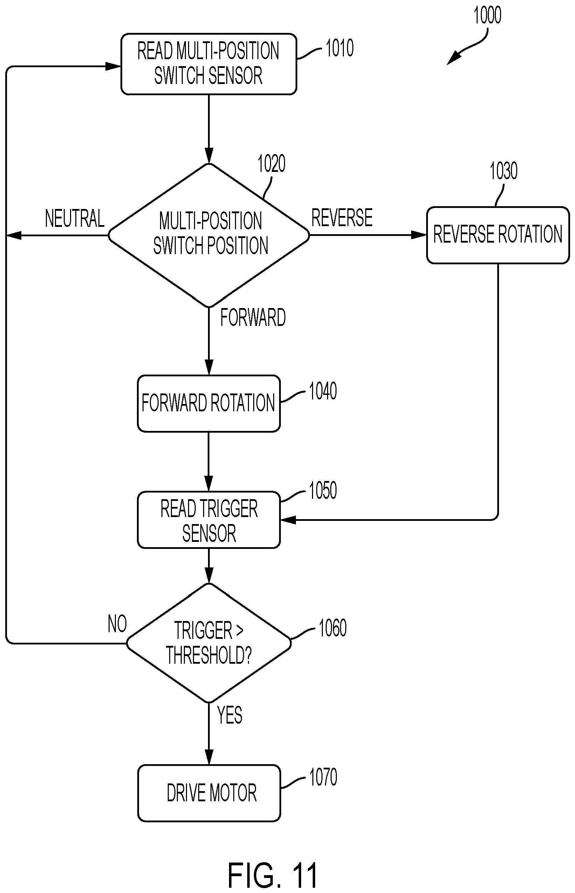

FIG. 11 is a flow chart for a method 1000 of receiving sensor signals from the trigger sensor 116 and the multi-position switch sensor 120 on the circuit board 106 and controlling an operational characteristic of the power tool 10 based on the sensor signals.

At block 1010, the multi-position switch sensor 120 is read. The reading of the multi-position switch sensor 120 determines the position of the multi-position switch 42/242/342/542. In the embodiment illustrated in FIGS. 2A-B, 3A, 4, 5, and 6A-B the multi-position switch sensor 120 reads a magnetic flux of the second magnet 98 in the sensing axis A1 orthogonal to the switch axis S 1, which changes as the multi-position switch 42 or 242 moves along switch axis S 1 or S2. For example, in the neutral position, magnetic flux is measured as a reduced value (e.g., a minimum value). When in the forward position or the reverse position, magnetic flux is measured as an increased value (e.g., a maximum value) and, for example, the polarity of the output of the multi-position switch sensor 120 dictates position. In other embodiments, the magnetic flux value for determining the neutral position may be a maximum value, and the magnetic flux values for determining the forward or reverse positions may be a reduced value.

At block 1020, the multi-position switch sensor 120 on the circuit board 106 provides a first signal indicating whether the multi-position switch 42/242/342/542 is in a forward position, a reverse position, or a neutral position. The position is determined based on what range the magnetic flux reading of the multi-position switch sensor 120 falls within. If the magnetic flux reading falls within a first range, the multi-position switch 42/242/342/542 is in the forward position and the motor 980 is in a forward rotation state (block 1040). If the magnetic flux reading falls within a second range, the multi-position switch 42/242/342/542 is in the reverse position and the motor 980 is in a reverse rotation state (at block 1030). If the magnetic flux falls within a third range, the multi-position switch 42/242/342/542 is in a neutral position and the motor 980 is prevented from rotating. Instead, the method 1000 proceeds back to block 1010 to read the multi-position switch sensor 120.

At block 1050, the trigger sensor 116 is read. The reading from the trigger sensor 116 determines if the trigger 38 has been actuated.

At block 1060, the reading from trigger sensor 116 is compared to a trigger threshold. If the reading from the trigger sensor 116 is greater than the trigger threshold (e.g., some amount of depression of the trigger 38), the motor 980 is powered to be driven (at block 1070) proportionally to the reading from the trigger sensor 116. The direction of rotation of the motor 980 is based on the motor state determined at block 1020. If the reading from the trigger sensor 116 is less than the trigger threshold, the method 1000 proceeds back to block 1010 to read the multi-position switch sensor 120.

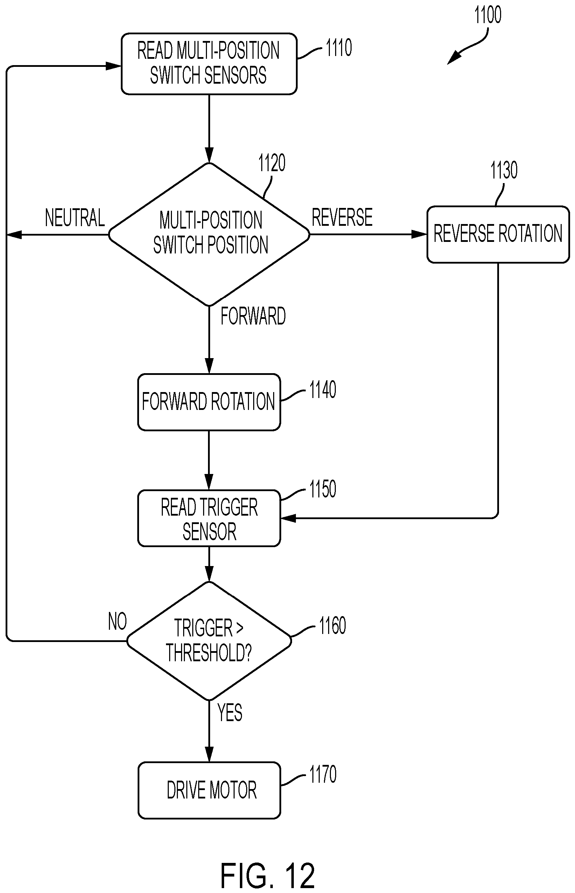

FIG. 12 is a flow chart for a method 1100 for receiving sensor signals from the trigger sensor 116 and the set of multi-position switch sensors 120B on the circuit board 106B and controlling an operational characteristic of the power tool 10 based on the sensor signals.

At block 1110, the multi-position switch sensors 120B are read. The readings of the multi-position switch sensors 120B determine the position of the multi-position switch 42/242/342/542. In the embodiment illustrated FIGS 3B, the multi-position switch sensors 120B measure the magnetic flux of the second magnet 98 of the multi-position switch 42/242/342/542 in the sensing axis A2 orthogonal to the switch axis S 1. For example, in the neutral position, magnetic flux is measured as a reduced value (e.g., a minimum value) for both of the multi-position switch sensors 120B. When in the forward position or the reverse position, magnetic flux is measured as an increased value (e.g., a maximum value) on one of the multi-position switch sensors 120B. Depending, for example, on which of the multi-position switch sensors 120B is a low value, the controller 900 can determine whether forward or reverse is selected.

At block 1120, the multi-position switch sensors 120B on the circuit board 106B provide first signals indicating whether the multi-position switch 42/242/342/542 is in a forward position, a reverse position, or a neutral position. The position is determined based on what range each of the magnetic flux readings of the multi-position switch sensors 120B falls within. For example, if both magnetic flux readings fall within a first range, the multi-position switch 42/242/342/542 is in the forward position and the motor is in a forward rotation state (block 1140). If both magnetic flux readings fall within a second range, the multi-position switch 42/242/342/542 is in the reverse position and the motor is in a reverse rotation state block 1130. If the magnetic flux readings fall within a third range, the multi-position switch 42/242/342/542is in a neutral position and the motor 980 is prevented from rotating. Instead, the method 1100 proceeds back to block 1110 to read the multi-position switch sensors 120B.

At block 1150, the trigger sensor 116 is read. The reading from the trigger sensor 116 determines if the trigger 38 has been actuated.

At block 1160, the reading from trigger sensor 116 is compared to a trigger threshold. If the reading from the trigger sensor 116 is greater than the trigger threshold (e.g., some amount of depression of the trigger 38), the trigger 38 has been actuated and the motor 980 is powered to be driven (at block 1170) proportionally to the reading from the trigger sensor 116. The direction of rotation of the motor is based on the motor state determined at block 1120. If the reading from the trigger sensor 116 is less than the trigger threshold, the method 1100 proceeds back to block 1110 to read the multi-position switch sensors 120B.

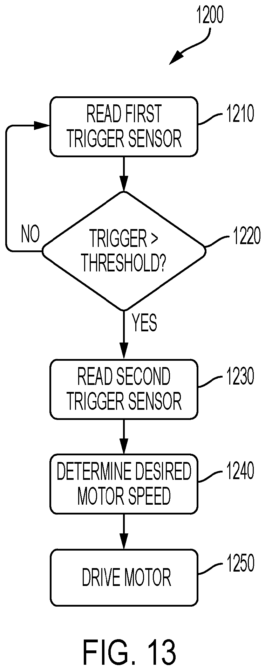

FIG. 13 is a flow chart for a method 1200 for receiving signals from the trigger sensors 416A, 416B or 616A, 616B and controlling a speed of the motor 980 based on the sensor signals.

At block 1210, the first trigger sensor 416A or 616A is read. Specifically, the first trigger sensor 416A or 616A measures the magnetic flux generated by the trigger magnet 360 or 560 of the trigger 338 or 538.

At block 1220, the reading of the first trigger sensor 416A or 616A is compared to a trigger threshold. If the reading of the first trigger sensor 416A or 616A does not exceed the trigger threshold, the method 1200 proceeds back to block 1210 to read the first trigger sensor 416A or 616A. If the reading of the first trigger sensors 416A or 616A exceeds the trigger threshold, the trigger 338 or 538 is determined to be actuated and the method 1200 proceeds to block 1230. In some embodiments, an output of the first trigger sensors 416A or 616A is provided directly to an enable pin of a gate driver. When the trigger 338 or 538 is actuated, the gate driver is enabled. If the trigger 338 or 538 is not actuated, the gate driver is disabled.

At block 1230, the second trigger sensor 416B or 616B is read. Specifically, the second trigger sensor 416B or 616B measures the magnetic flux generated by the trigger magnet 360 or 560 of the trigger 338 or 538.

At block 1240, the reading of the second trigger sensor 416B or 616B is used to calculate a desired motor speed. For example, the desired motor speed changes proportionally to the readings from the second trigger sensor 416B or 616B.

At block 1250, the motor 980 is driven at the motor speed determined in block 1240.

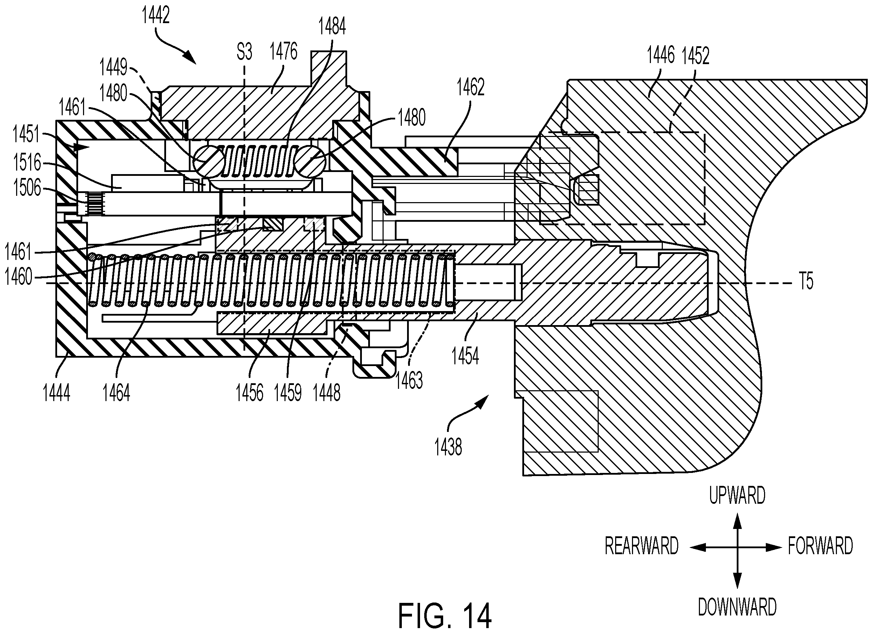

FIG. 14 illustrates another embodiment of a first user input device or a trigger 1438 with like parts to the trigger 38, another embodiment of a second input device or a multi-position switch 1442 with like parts to multi-position switch 42, and an input device housing 1444. The illustrated embodiment in FIG. 14 having like reference numerals plus "1400," and the differences are explained below. The input device housing 1444 is positioned within a housing of a power tool 1410 (e.g., power tool 10) and includes a trigger opening 1448, a switch opening 1449, an internal cavity 1451, and a male rail 1462. The trigger opening 1448 is formed on a front face of the input device housing 1444 and is configured to receive a portion of the trigger 1438. The switch opening 1449 is formed on a top face of the input device housing 1444 and is configured to receive a portion of the multi-position switch 1442. The male rail 1462 is integrally formed on the front face and partially supports the axial movement of the trigger 1438. The internal cavity 1451 houses portions of the trigger 1438, portions of the multi-position switch 1442, and a circuit board 1506.

As shown in FIG. 14, the trigger 1438 is partially housed in the input device housing 1444 and partially extends beyond the input device housing 1444 and the surrounding housing of the power tool 1410. Normally, the trigger 1438 is in a home position (fully extended), as shown in FIG. 14, and is moveable along a trigger axis T5 to change an operational characteristic (e.g., motor speed) of the power tool 1410. The range of motion of the trigger 1438 includes a dead zone, where the trigger 1438 may be partially displaced from the home position, but no change in the operational characteristics of the power tool 1410 occurs. The trigger 1438 includes an actuatable portion 1446, a rail opening 1452, a post 1454, and a sensed element housing 1456. The actuatable portion 1446 extends beyond the input device housing 1444 and is shaped to receive the user's finger. The rail opening 1452 is formed in the actuatable portion 1446 and is shaped to receive the male rail 1462. The post 1454 is integrally formed on the actuatable portion 1446 and extends into the input device housing through the trigger opening 1448. In other embodiments, the post 1454 may be separate from the actuatable portion 1446 and may be inserted into the actuatable portion 1446. The post 1454 and the male rail 1462 are configured to support the axial movement of the trigger 1438 along the trigger axis T5. Additionally, the post 1454 includes a spring opening 1463 configured to receive an end of an elastic element 1464, configured to bias the trigger 1438 in the forward direction. In the illustrated embodiment, the sensed element housing 1456 is formed at an end of the post 1454 and houses a metallic target 1459, a magnet 1460, and a trigger wiper 1461, each configured to interact with portions of the circuit board 1506. The metallic target 1459 is configured to disrupt a magnetic field and is composed of ferrous or nonferrous metal. The magnet 1460 produces a magnetic flux detectable by a sensor, as described in further detail below. The trigger wiper 1461 is a conductive metallic member configured to contact a surface of the circuit board 1506.

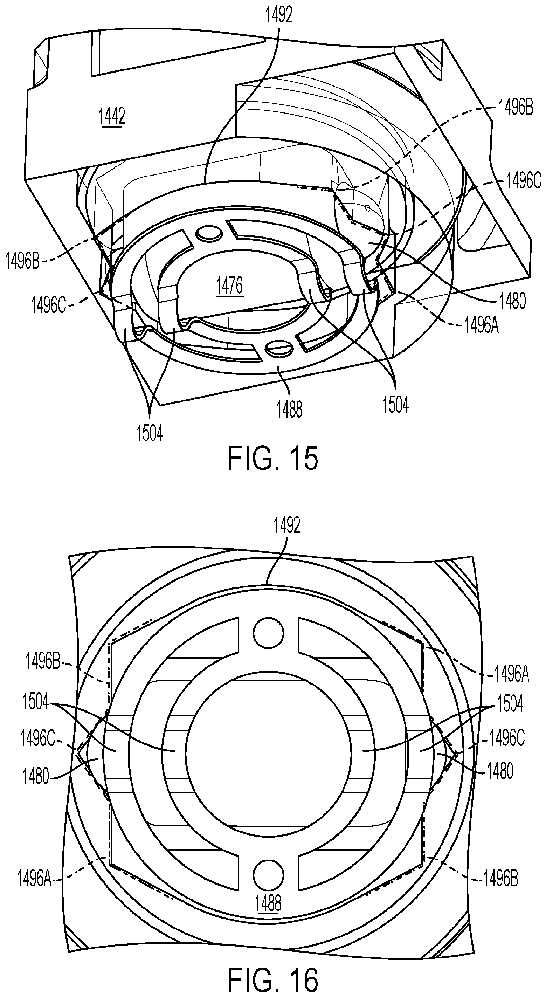

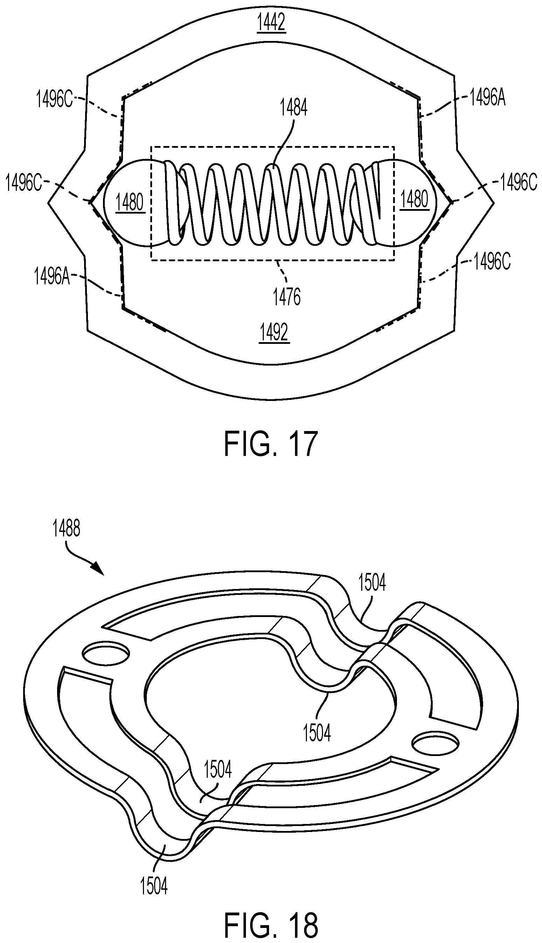

As shown in FIG. 14-18, the multi-position switch 1442 is partially housed within the input device housing 1444 and partially extends beyond the input device housing 1444 and the surrounding housing of the power tool 1410. The multi-position switch 1442 is rotatable about a switch axis S3 and is configured to maintain a plurality of set positions. Each position of the multi-position switch 1442 corresponds to a state (e.g., motor rotation direction) of the power tool 1410. The multi-position switch 1442 includes a switch body 1476, a plurality of positioning balls 1480, a ball spring 1484, and a switch wiper 1488. The switch body 1476 is positioned partially within the switch opening 1449 and is engaged by the user to rotate the multi-position switch 1442 about a switch axis S3. Also, as shown in FIGS. 15 and 16, the switch body 1476 receives the plurality of positioning balls 1480 and the ball spring 1484. In the illustrated embodiment, the switch body 1476 includes two positioning balls 1480, and the ball spring 1484 is in between the two positioning balls 1480. In other embodiments, the switch body 1476 may include more than two positioning balls 1480. The positioning balls 1480 are located in a ball groove 1492 of the input device housing 1444 and are biased against the ball groove 1492 by the ball spring 1484. The ball groove 1492 includes a set of first notches 1496A, a set of second notches 1496B, and a set of third notches 1496C. Each set of notches 1496A-C corresponds to one of the set positions of the multi-position switch 1442. In other embodiments, additional sets of notches 1496 may be included to correspond with additional set positions of the multi-positions switch 1442. Additionally, each set of notches 1496 is circumferentially spaced apart from one another in the ball groove 1492, as shown in FIG. 16-17. In the illustrated embodiment, each set of notches 1496 includes two notches spaced 180 degrees apart and are shaped to receive the positioning balls 1480. When the positioning balls 1480 fall within one of the sets of notches 1496A-C, the switch body 1476 encounters additional resistance to rotate, compared to when the positioning balls 1480 are not within one of the sets of notches 1496A-C. The additional resistance results from the ball spring 1484 applying a biasing force to the positioning balls 1480 to remain in the notches 1496A-C. As a result, the orientation of the multi-position switch 1442 is maintained if the positioning balls 1480 are in one of the sets of the notches 1496A-C until the user applies enough force to the switch body 1476 to overcome the resistance to rotation.

FIGS. 14-16 and 18 show the switch wiper 1488 positioned between the switch body 1476 and the circuit board 1506. The switch wiper 1488 is circular and is composed of a conductive material. Additionally, the switch wiper 1488 includes a plurality of protrusions 1504, which extend from the remainder of the switch wiper 1488 to contact a portion of the circuit board 1506. In the illustrated embodiment, the switch wiper 1488 includes four protrusions 1504, all in line with one another. In other embodiments, the switch wiper 1488 may include more or less than four protrusions 1504, not all in alignment with one another.

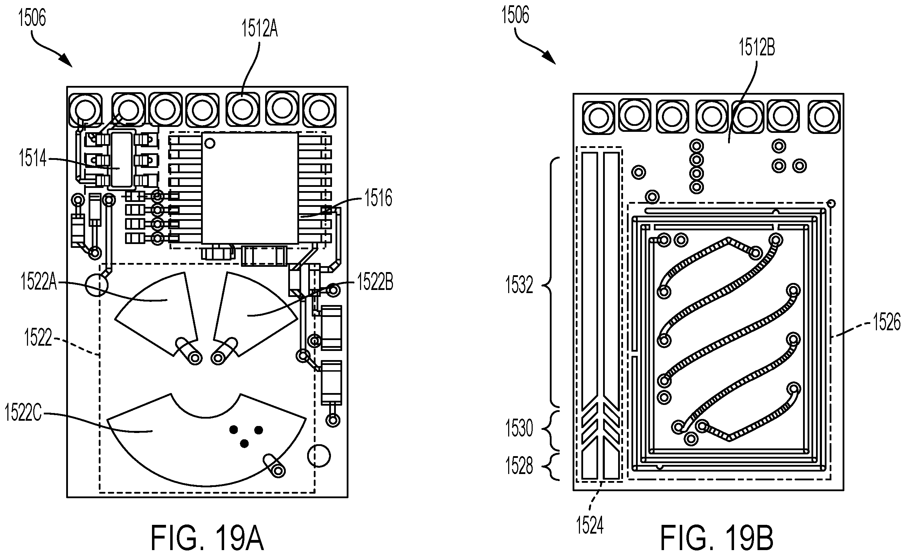

FIGS. 19A-B show a first side 1512A and a second side 1512B of the circuit board 1506, respectively. The first side 1512A faces the multi-position switch 1442 and includes a wake sensor 1514, a trigger sensor 1516, and a plurality of contact pads 1522. The second side 1512B faces the sensed element housing 1456 and includes a set of contact rails 1524 and a plurality of inductive coils 1526. In some embodiments, only one of the wake sensor 1514 or the set of contact rails 1524 is included on the circuit board 1506 (e.g., either the wake sensor 1514 is used to wake up the controller or the set of contact rails 1524 is used to wake up the controller).

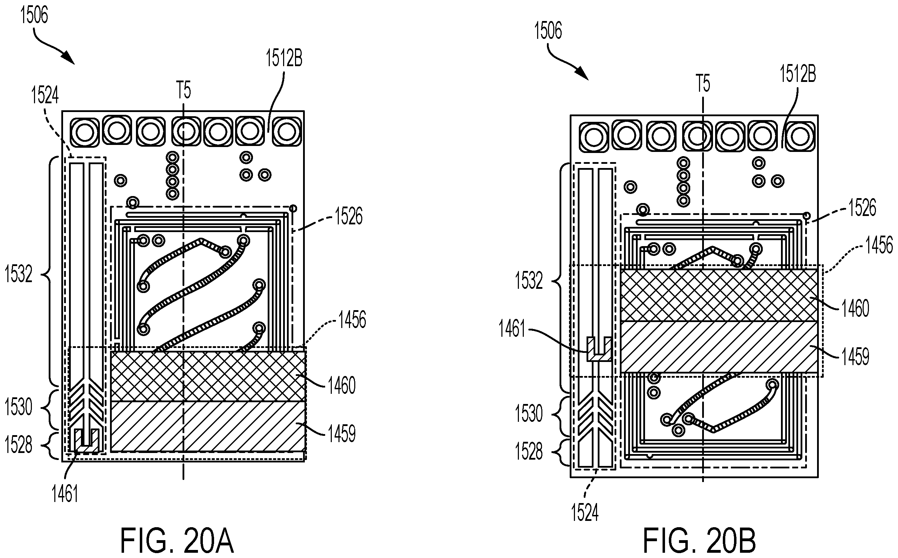

As shown in FIG. 19B, the contact rails 1524 are two parallel regions of exposed metal on the circuit board 1506. The contact rails 1524 are configured to determine if the trigger 1438 has been displaced along the trigger axis T5 from the home position. Specifically, the contact rails 1524 detect displacement of the trigger 1438 through mechanical and electrical contact with the trigger wiper 1461. Furthermore, the contact rails 1524 are separated into a home section 1528, a dead zone section 1530, and an active section 1532. The home section 1528 includes two contact pads, selectively contacted by the trigger wiper 1461 when the trigger 1438 is in the home position, as shown in FIG. 20A. When contacted by the trigger wiper 1461, the two pads of the home section 1528 are connected, but no signal is passed to the controller, which indicates that the trigger 1438 is not depressed. In other embodiments, a home signal (e.g., a voltage signal) may be sent to the controller when the trigger wiper 1461 contacts both rails of the home section 1528. The dead zone section 1530 is a ribbed region alternating between contact pads and an insulated surface of the circuit board 1506. The dead zone section 1530 separates the home section 1528 and the active section 1532 and contacts the trigger wiper 1461 when the trigger 1438 is in the dead zone. In the illustrated embodiment, the dead zone section 1530 is ribbed and alternates between a conductive metal surface and an insulated top surface of the circuit board 1506. When the trigger wiper 1461 passes over the conductive metal surfaces of the dead zone section 1530, no signal is sent to the controller and no action will be taken by the controller. In other embodiments, when the trigger wiper 1461 passes over the dead zone section 1530, a dead zone signal (e.g., a voltage signal alternating between 0 and 3.3 Volts) is sent to the controller to indicate that the trigger 1438 is in the dead zone. The active section 1532 is a continuous section of the contact rails 1524 and contacts the trigger wiper 1461 when the trigger 1438 is depressed past the dead zone, as shown in FIG. 20B. When the trigger wiper 1461 contacts both rails of the active section 1532, a wake signal (e.g., a voltage signal of 3.3 Volts or 5 Volts) is sent to the controller and the controller is switched between a sleep mode and an active mode.

The wake sensor 1514 is also configured to detect if the trigger 1438 has been displaced along the trigger axis T5. In the illustrated embodiment, the wake sensor 1514 sends a wake signal that is redundant to the signals sent by the contact rails 1524. Further, in the illustrated embodiment, the wake sensor 1514 is a digital hall effect sensor and compares a measured magnetic flux of the magnet 1460 of the trigger 1438 to a threshold value. The measured magnetic flux of the magnet 1460 increases as the trigger 1438 is moved along the trigger axis T5 closer to the wake sensor 1514. The wake sensor 1514 can be configured, for example, to output a pulse-width modulated ("PWM") signal based on an amount of sensed magnetic flux. In other embodiments, the wake sensor 1514 may be an analog Hall effect sensor or other type of non-contact sensor.

The trigger sensor 1516 is configured to measure the degree to which the trigger 1438 has been displaced from the home position. In the illustrated embodiment, the trigger sensor 1516 is an inductive sensor configured to measure the inductance produced in the inductive coils 1526 as the metallic target 1459 of the trigger 1438 is moved. The trigger sensor 1516 sends a trigger displacement signal related to (e.g., proportional) to the measured inductance or a change in inductance to the controller. Based on the trigger displacement signal, the controller sends corresponding power to rotate the motor at a desired speed. In other embodiments, the trigger sensor 1516 may be a Hall effect sensor or another type of non-contact sensor.

As shown in FIG. 19A, the plurality of contact pads 1522 are each partial annuli-shaped regions of exposed metal on the circuit board 1506 and are configured to contact the protrusions 1504 of the switch wiper 1488 selectively. The plurality of contact pads 1522 include a first contact pad 1522A, a second contact pad 1522B, and a third contact pad 1522C. In the illustrated embodiment, the areas of the first contact pad 1522A and the second contact pad 1522B are equal, while the area of the third contact pad 1522C is larger than the remaining contact pad 1522A-B. In other embodiments, the plurality of contact pads 1522 may include more or less than three contact pads, and each contact pad 1522 may have a unique or equivalent area.

During operation, a combination of the contact pads 1522A-C is engaged and electrically connected to one another depending on the position of the multi-position switch 1442. Specifically, if the multi-position switch 1442 is rotated such that the positioning balls 1480 are engaged with the first set of notches 1496A, the protrusions 1504 of the switch wiper 1488 electrically connect the third contact pad 1522C with an insulated surface of the circuit board 1506. As a result, no signal is sent to the controller, and the motor will not rotate even if the trigger displacement signal is received. If the multi-position switch 1442 is rotated such that the positioning balls 1480 are engaged with the second set of notches 1496B, the protrusions 1504 of the switch wiper 1488 electrically connect the third contact pad 1522C with the first contact pad 1522A. As a result, a first direction signal is sent to the controller, and the motor of the power tool 1410 will be rotated in a first direction (e.g., forward). Lastly, if the multi-position switch 1442 is rotated such that the positioning balls 1480 are engaged with the third set of notches 1496C, the protrusions 1504 of the switch wiper 1488 are electrically connected with the third contact pad 1522C with the second contact pad 1522B. As a result, a second direction signal is sent to the controller, and the motor of the power tool 1410 will be rotated in a second direction (e.g., reverse). In other embodiments, the different connections between the contact pads 1522A-C may correspond with changing different operational characteristics of the power tool 1410.

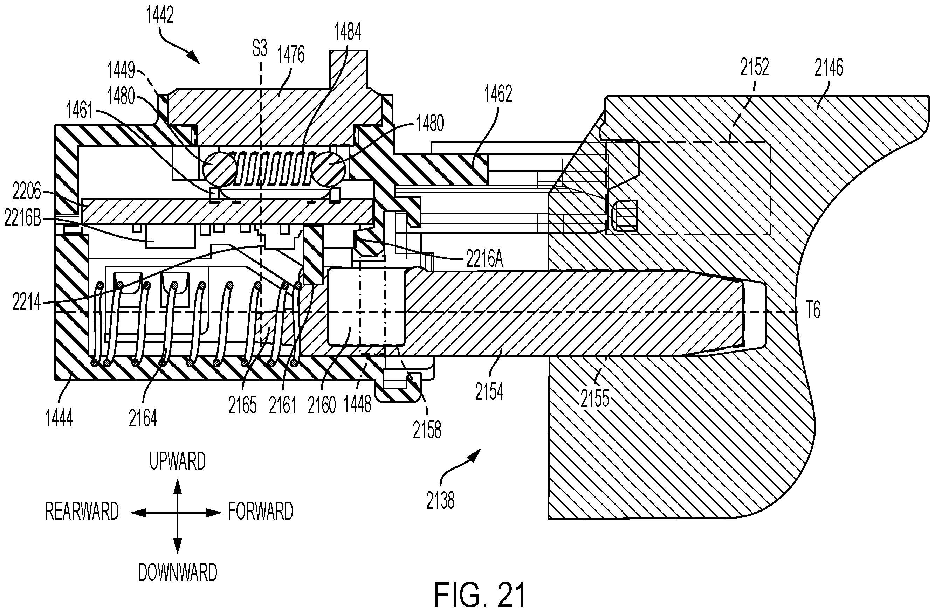

FIG. 21 illustrates another embodiment of a trigger 2138 with like parts to trigger 1438 and a circuit board 2206 with like parts to the circuit board 2206 paired with the multi-position switch 1442 and the input device housing 1444, as described above. The embodiments of the trigger 2138 and the circuit board 2206 of FIG. 21 having like reference numerals plus "2100," and the differences being explained below.

As shown in FIG. 21, the trigger 2138 is partially housed within the input device housing 1444 and partially extends beyond the input device housing 1444 and the surrounding housing of the power tool 2110. FIG. 21 also shows the trigger 2138 in a home position and is movable along a trigger axis T6. The range of motion of the trigger 2138 includes a dead zone, where the trigger 2138 may be partially depressed without any change to the operational characteristics of the power tool 2110. The trigger 2138 includes an actuatable portion 2146, a rail opening 2152, and a post 2154. The post 2154, along with the male rail 1462, is configured to support the axial movement of the actuatable portion 2146 along the trigger axis T6. In the illustrated embodiment, a first end of the post 1454 is inserted into a post opening 2155 formed in the actuatable portion 2146. A second end of the post 2154, opposite to the first end, is inserted into the trigger opening 1448. The post 2154 further includes a magnet recess 2158, an elastic element retention feature 2165, and a trigger wiper 2161. The magnet recess 2158 is formed adjacent to the second end of the post 2154 and faces the circuit board 2206. The magnet recess 2158 also receives a magnet 2160 in an orthogonal direction to the trigger axis T6. The spring retention feature 2165 is formed on the second end of the post 2154 and maintains the alignment of the elastic element 2164 and the post 2154.

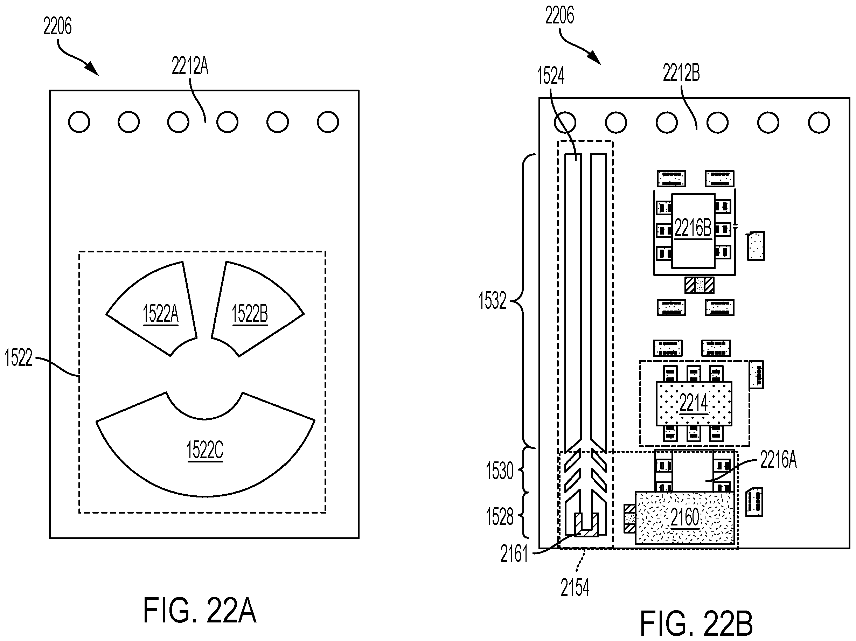

FIGS. 22A and 22B show a first side 2212A and a second side 2212B of the circuit board 2206, respectively. The first side 2212A faces the multi-position switch 1442 and includes a plurality of contact pads 1522, which is further composed of a first contact pad 1522A, a second contact pad 1522B, and a third contact pad 1522C. The second side 2212B faces the post 2154 of the trigger 2138 and includes a set of trigger sensors 2216, a wake sensor 2214, and a set of contact rails 1524.

As shown in FIG. 22B, the set of trigger sensors 2216 includes a first trigger sensor 2216A adjacent to the home section 1528 of the contact rails 1524 and a second trigger sensor 2216B adjacent to the active section 1532 of the contact rails 1524. Both trigger sensors 2416A-B are in line with one another along an axis parallel to the trigger axis T6 and the contact rails 1524. In the illustrated embodiment, each trigger sensor 2216 is a 3D digital Hall effect sensor configured to detect the strength of a magnetic field along an X-axis, Y-axis, and Z-axis. In other embodiments, the trigger sensors 2216A-B may be a 2D hall effect sensor, an analog hall effect sensor, or another type of non-contact sensor. In further embodiments, both trigger sensors 2216A/B may not be the same type of sensor. Also, in the illustrated embodiment, the trigger sensors 2216A-B communicate with a controller using an I2C bus. In other embodiments, the trigger sensors 2216A-B may communicate with the controller using SPI.

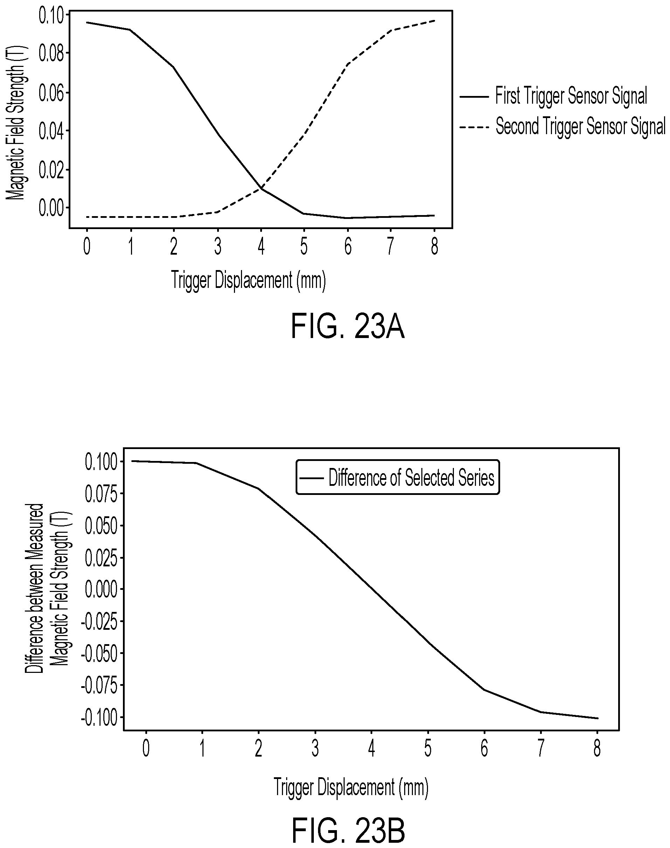

In operation, the trigger sensors 2216A-B are configured to determine the displacement of trigger 2138 from the home position and output a corresponding signal. Specifically, each trigger sensor 2216A-B measures a strength of the magnetic field of the magnet 2160 as the trigger 2138 is moved along the trigger axis T6. The exemplary measured magnetic field strengths of each trigger sensor 2216A-B are shown in FIG. 23A. FIG. 23A shows that the measured magnetic field strength of the first trigger sensor 2216A decreases as the displacement distance of the trigger 2138 increases. FIG. 23A also shows that the measured magnetic field strength of the second trigger sensor 2216B increases as the displacement distance of the trigger 2138 increases. Next, the difference between the measured magnetic field strengths of both trigger sensors 2216A-B is taken (shown in FIG. 23B), and a single trigger displacement signal reflecting the difference is sent to the controller. By relying on the set of trigger sensors 2216A/B to produce the trigger displacement signal, interference from other magnetic fields positioned within the power tool 2110 or beyond the power tool 2110 is reduced. Additionally, the first sensor 2216A is configured to determine if the trigger 2138 is displaced past the dead zone. If trigger 2138 is displaced past the dead zone, the first trigger sensor 2216A will send a wake signal to the controller.

The wake sensor 2214 is also configured to detect if the trigger 2138 has been displaced past the dead zone. In the illustrated embodiment, the wake sensor 2214 sends a wake signal that is redundant to the signals sent by the contact rails 1524 and the first trigger sensor 2216A. Further, in the illustrated embodiment, the wake sensor 2214 is a digital Hall effect sensor and compares a measured magnetic flux of the magnet 2160 of the trigger 1438 to a threshold value. The measured magnetic flux of the magnet 1460 increases as the trigger 1438 is moved along the trigger axis T6 closer to the wake sensor 2214.

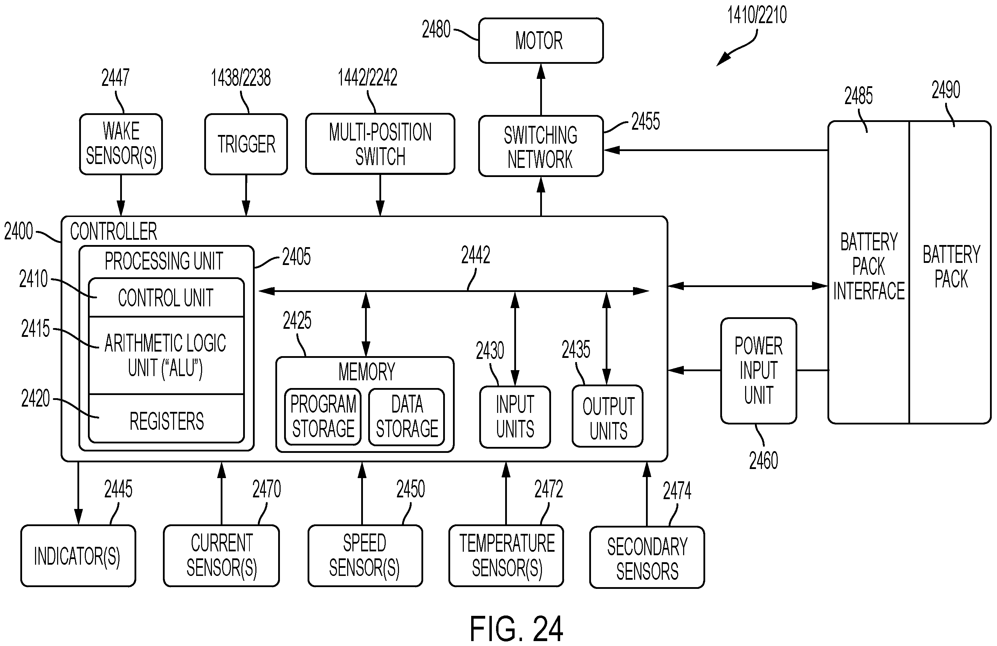

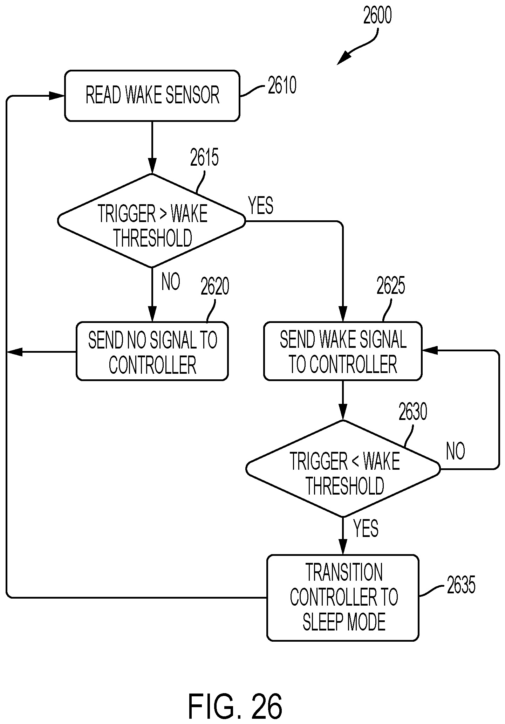

FIG. 24 illustrates another embodiment of a controller 2400, with like parts to controller 900, for a power tool 1410/2110. The illustrated embodiment in FIG. 26 having like reference numerals plus "2400," and the differences are explained below. The controller 2400 is electrically and/or communicatively connected to a variety of modules or components of the power tool 1410/2110. For example, the illustrated controller 2400 is connected to indicators 2445, wake sensor(s) 2447, current sensor(s) 2470, speed sensor(s) 2450, temperature sensor(s) 2472, secondary sensor(s) 2474 (e.g., a voltage sensor, an accelerometer, a torque sensor or torque transducer, etc.), the trigger 1438/2148, the multi-position switch 1442, a power switching network 2455, and a power input unit 2460.

The controller 2400 includes a sleep mode and an active mode. In the sleep mode, the controller 2400, only the wake sensor 2447 is powered, and only the output of the wake sensor 2447 is measured. The remaining modules and components are not powered, so the power tool 1410/2110 consumes less power when in the sleep mode compared to the active mode. In the active mode, the remaining sensors and the gate driver are powered. The sleep mode and the active mode are determined by a wake signal from the wake sensor 2447.

In the embodiment illustrated in FIG. 14, the wake signal is sent by the trigger wiper 1461, electrically connecting the conductive areas of the active section 1532. Alternatively, the wake signal can also be sent when the magnet 1460 is within a set distance from the wake sensor 1514. When within the set distance, the measured magnetic flux of the wake sensor 1514 exceeds a preset threshold.

In the embodiment illustrated in FIG. 21, the wake signal is also sent by the trigger wiper 2161, electrically connecting the contact rail 1524 of the active section 1532. Alternatively, the first trigger sensor 2216A can also send the wake signal, or the wake sensor 2447 can send the wake signal when the magnet 2160 is within a set distance from the first trigger sensor 2216A or the wake sensor 2447 and a measured magnetic flux of the first trigger sensor 2216A or the wake sensor 2214 exceeds a preset threshold.

Once in the active mode, the controller's 2400 gate drivers are enabled, and the motor 2480 can be driven to rotate an output (e.g., a driver) in response to a user's actuation of the trigger 1438/2138. In the embodiment illustrated in FIG. 14, depression, the trigger 1438 changes an inductance sensed by the trigger sensor 1516, and a speed signal is sent to the controller 2400 to drive the motor 2480 at a specific speed. In the embodiment illustrated in FIG. 21, depression of the trigger 2138 changes the magnetic flux sensed by the first and second trigger sensors 2216A-B, and a speed signal proportional to the difference between the magnetic flux readings between the first and second trigger sensors 2216A/B is sent to the controller 2400. The speed signal sent to the controller 2400 determines the speed at which the motor 2480 is driven.

Before rotating the motor 2480 based on the speed signal, the controller 2400 determines a direction of rotation based on the position of the multi-position switch 1442. If the multi-position switch 1442 is in a first position, no direction signal is sent to the controller 2400, and as a result, the motor 2480 does not rotate even when the speed signal is received. If the multi-position switch is in a second position, a first direction signal is sent to the controller 2400, and as a result, the motor 2480 rotates in a first direction at a speed based on the speed signal. If the multi-position switch is in a third position, a second direction signal is sent to the controller 2400, and as a result, the motor 2480 rotates in a second direction at a speed based on the speed signal.

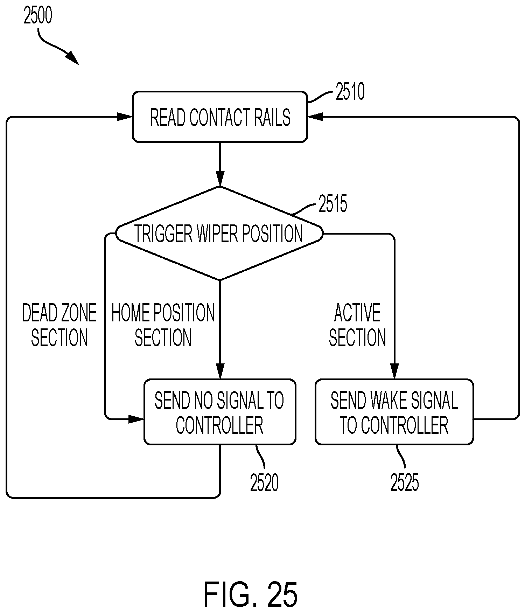

FIG. 25 is a flow chart for a method 2500 for determining whether to set the controller 2400 of the power tool 1410, 2110 to the sleep mode or the active mode.

At block 2510, the contact rails 1524 are read. The reading of the control rails 1524 determines the position of trigger 1438, 2138. Specifically, the position of the trigger 1438, 2138 is determined by where the trigger wiper 1461, 2161 is positioned on contract rails 1524.

At block 2515, the contact rails 1524 are used to determine what signal to send to the controller based on the position of the trigger wiper 1461, 2161. No signal is generated when the trigger wiper is in the home section 1528 or the dead zone section 1530 and the method 2500 proceeds to block 2520. The wake signal is generated by the trigger wiper 1461/, 2161 electrically connecting each rail of the active section 1532 and the method 2500 proceeds to block 2525.

At block 2520, the controller 2400 is sent no signal and the sleep mode of the controller 2400 is maintained. In the sleep mode, for example, the gate driver of the controller 2400 is disabled. The method 2500 returns to block 2510 to read the contact rails 1524 for any change in the signal received.

At block 2525, the controller 2400 is sent a wake signal to transition the controller 2400 into the active mode. In the active mode, the gate driver of the controller 2400 is powered and the motor 2480 can be powered. The method 2500 returns to block 2510 to read the contact rails 1524 for any change in the signal received.

FIG. 26 is a flow chart for a method 2600 for determining whether to set the controller 2400 of the power tool 1410 to the sleep mode or to the active mode. For the power tool 1410, the controller 2400 will switch to the active mode if either method 2500 or method 2600 makes the determination to wake.

At block 2610, the wake sensor 1514 is read. The reading of the wake sensor 1514 is used to determine if the trigger 1438 has been displaced past the dead zone. In some embodiments, the wake sensor 1514 is a Hall effect sensor configured to measure a magnetic flux generated by the trigger magnet 1460, which changes as the trigger 1438 and the trigger magnet 1460 move along the trigger axis T5.

At block 2615, the reading from the wake sensor 1514 is compared to a wake threshold. If the reading from the wake sensor 1514 falls below the wake threshold, the method 2600 proceeds to block 2620. If the reading from the wake sensor 1514 exceeds the wake threshold, the method 2600 proceeds to block 2625.

At block 2620, the controller 2400 receives no signal and the controller 2400 remains in the sleep mode. In the sleep mode, the gate driver of the controller 2400 is disabled. The method 2600 returns back to block 2610 to read the wake sensor 1514 for any change in reading.

At block 2625, the controller 2400 receives a wake signal and the controller 2400 is transitioned to the active mode. In the active mode, the gate driver of the controller 2400 is powered and the motor 2480 can be powered. The method 2600 then proceeds to block 2630.

At block 2630, the reading from the wake sensor 1514 is compared to the wake threshold again. If the reading from the wake sensor 1514 remains above the wake threshold, the method 2600 returns to block 2625 and continues to send the wake signal to the controller 2400. If the reading from the wake sensor 1514 falls below the wake threshold, the method 2600 proceeds to block 2635.

At block 2635, the controller 2400 stops receiving the wake signal and the controller 2400 is transitioned to the sleep mode. To transition the controller 2400 to the sleep mode, for example, a sleep timer can be initiated. Once the sleep timer has elapsed (e.g., a threshold amount of time has passed), the gate driver is disabled and rotation of the motor 2480 will stop. The method 2600 then returns to block 2610 to read the wake sensor 1514 for any change in reading.

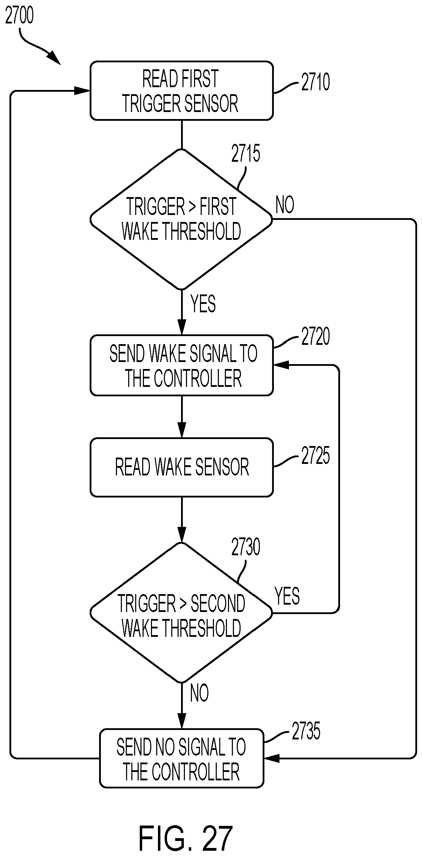

FIG. 27 is a flow chart for a method 2700 for determining whether to set the controller 2400 of the power tool 2110 to the sleep mode or to the active mode. For the power tool 2110, the controller 2400 will switch to the active mode if either method 2500 or method 2600 makes the proper determination.

At block 2710, the first trigger sensor 2216A is read. The reading from the first trigger sensor 2216A is used to determine if the trigger 2138 has been displaced beyond the dead zone. The first trigger sensor 2216A measures, for example, a magnetic flux generated by the trigger magnet 2160. The magnetic flux measured by the first trigger sensor 2216A will vary as the trigger 2138 and the trigger magnet 2160 move along the trigger axis T6.

At block 2715, the reading from the first trigger sensor 2216A is compared to a first wake threshold. If the reading from the first trigger sensor 2216A is greater than the first wake threshold, the method 2700 proceeds to block 2720. If the reading from the first trigger sensor 2216A is less than the first wake threshold, the method 2700 proceeds to block 2735. In some embodiments the first trigger sensor 2216A is not used to wake the controller 2400.

At block 2720, the controller 2400 receives a wake signal and the controller 2400 is transitioned to the active mode. In the active mode, the gate driver of the controller 2400 is powered and the motor 2480 can be powered. The method 2700 then proceeds to block 2725.

At block 2725, the wake sensor 2214 is read. The reading from the wake sensor 2214 also determines if the trigger 2138 has been displaced beyond the dead zone. The wake sensor 2214 also measures a magnetic flux generated by the trigger magnet 2160. The magnetic flux measured by the wake sensor 2214 will vary as the trigger 2138 and the trigger magnet 2160 move along the trigger axis T6.

At block 2730, the reading from the wake sensor 2214 is compared to a second wake threshold. If the reading from the wake sensor 2214 is greater than the second wake threshold, the method 2700 proceeds back to block 2720 and the wake signal will continue to be sent to the controller 2400. If the reading from the wake sensor 2214 is less than the second wake threshold, the method 2700 proceeds to block 2735. In some embodiments the first wake threshold and the second wake threshold have the same value. In other embodiments the second wake threshold is greater than or less than the first wake threshold. In some embodiments, the wake sensor 2214 does not provide a wake signal to the controller 2400. Rather, the output from the wake sensor can be used to directly control and active/disabled state of the gate driver.

At block 2735, the controller 2400 stops receiving the wake signal and the controller 2400 is transitioned to the sleep mode. To transition the controller 2400 to the sleep mode, for example, a sleep timer is initiated. Once the sleep timer has elapsed, the gate driver of the controller 2400 is disabled and rotation of the motor 2480 will stop. The method 2700 will return to block 2710 to read the wake sensor 2214 for any change in reading.

### REPRESENTATIVE FEATURES

Representative features are set out in the following clauses, which stand alone or may be combined, in any combination, with one or more features disclosed in the text and/or drawings of the specification.
Clause 1. A power tool comprising: a housing; a motor at least partially disposed within the housing; a first user input device partially disposed within the housing, the first user input device configured to be moved along a first axis to a plurality of distinct positions; a second user input device partially disposed within the housing, the second user input device configured to be moved along a second axis; a controller configured to control an operational characteristic of the motor; and a circuit board connected to the controller, the circuit board including: a first sensor positioned on a first side of the circuit board, the first sensor configured to sense the plurality of distinct positions of the first user input device, and a second sensor positioned on the first side of the circuit board, the second sensor configured to sense a displacement along the second axis of the second user input device.
Clause 2. The power tool of clause 1, wherein the first user input device is a multi-position switch, and the first user input device includes a switch body, a first magnetic member, and a first elastic member.
Clause 3. The power tool of clause 2, wherein: the switch body includes a recess configured to receive the first magnetic member; and the recess faces the first side of the circuit board.
Clause 4. The power tool of any preceding clause, wherein each of the plurality of distinct positions sensed by the first sensor corresponds to an operational mode of the motor.
Clause 5. The power tool of any preceding clause, wherein the second user input device is a trigger of the power tool, and the second user input device includes a second magnetic member and a second elastic member.
Clause 6. The power tool of any preceding clause, wherein the displacement sensed by the second sensor determines an output characteristic of the motor.
Clause 7. The power tool of any preceding clause, wherein the second axis on which the second user input device moves along is orthogonal to the first axis on which the first user input device moves along.
Clause 8. The power tool of any preceding clause, wherein a third sensor is positioned on the first side of the circuit board and adjacent to the first sensor, the third sensor is configured to sense the plurality of distinct positions of the first user input device.
Clause 9. The power tool of any preceding clause, wherein a third sensor is positioned on the first side of the circuit board adjacent to the second sensor, the third sensor configured to sense the displacement along the second axis of the second user input device.
Clause 10. The power tool of clause 9, wherein the third sensor generates a binary output based on the displacement of the second user input device along the second axis.
Clause 11. A power tool comprising: a housing; a motor at least partially disposed within the housing; a first user input device partially disposed within the housing, the first user input device configured to be moved along a first axis to a plurality of distinct positions; a second user input device partially disposed within the housing, the second user input device configured to be moved along a second axis; a controller configured to control an operational characteristic of the motor, the controller mounted on a first circuit board; and a second circuit board electrically connected to the first circuit board, the second circuit board includes a first sensor configured to sense the plurality of distinct positions of the first user input device and a second sensor configured to sense a displacement along the second axis of the second user input device.
Clause 12. The power tool of clause 11, wherein a third sensor is positioned on the second circuit board adjacent to the second sensor, the third sensor is configured to sense the displacement along the second axis of the second user input device.
Clause 13. The power tool of clause 12, wherein the third sensor generates a binary output based on the displacement of the second user input device along the second axis.
Clause 14. A power tool comprising: a housing; a motor at least partially disposed within the housing; a controller configured to control an operational characteristic of the motor; an input device housing positioned within the housing; a first user input device partially positioned within the input device housing, the first user input device displaceable along a first axis, the first user input device including a trigger magnet; a second user input device partially positioned within the input device housing, the second user input device rotatable about a second axis, the second user input device including a wiper; and a circuit board positioned within the input device housing, the circuit board including: a sensor configured to sense a displacement of the first user input device along the first axis, a plurality of contact pads configured to engage the first wiper of the second user input device, and a non-contact sensor configured to measure the displacement of the first user input device along the first axis.
Clause 15. The power tool of clause 14, wherein the input device housing includes a positioning groove with a plurality of notches.
Clause 16. The power tool of any of clauses 14 to 15, wherein: the second user input device further includes a plurality of positioning balls and a ball spring; and the plurality of positioning balls is located within the positioning groove of the input device housing.
Clause 17. The power tool of any of clauses 14 to 16, wherein the first wiper of the second user input device is circular and includes a plurality of protrusions configured to engage the plurality of contact pads on the second circuit board.
Clause 18. The power tool of any of clauses 14 to 17, wherein the non-contact sensor is a digital Hall effect sensor configured to measure a magnetic flux of the trigger magnet as the first user input device is moved along the first axis.
Clause 19. The power tool of any of clauses 14 to 18, wherein the non-contact sensor is an inductive sensor configured to measure a change in inductance as a metallic target of the first user input device is moved along the first axis.
Clause 20. The power tool of any of clauses 14 to 19, wherein the sensor includes one or more contact rails configured to engage a second wiper of the first user input device.

Thus, embodiments described herein provide, among other things, a power tool user interface including a first input unit and a second input unit. Various features and advantages are set forth in the following claims.

## Claims

1. A power tool comprising:
a housing;
a motor at least partially disposed within the housing;
a first user input device partially disposed within the housing, the first user input device configured to be moved along a first axis to a plurality of distinct positions;
a second user input device partially disposed within the housing, the second user input device configured to be moved along a second axis;
a controller configured to control an operational characteristic of the motor; and
a circuit board connected to the controller, the circuit board including:
a first sensor positioned on a first side of the circuit board, the first sensor configured to sense the plurality of distinct positions of the first user input device, and
a second sensor positioned on the first side of the circuit board, the second sensor configured to sense a displacement along the second axis of the second user input device.

2. The power tool of claim 1, wherein the first user input device is a multi-position switch, and the first user input device includes a switch body, a first magnetic member, and a first elastic member.

3. The power tool of claim 2, wherein:
the switch body includes a recess configured to receive the first magnetic member; and
the recess faces the first side of the circuit board.

4. The power tool of claim 1, wherein each of the plurality of distinct positions sensed by the first sensor corresponds to an operational mode of the motor.

5. The power tool of claim 1, wherein the second user input device is a trigger of the power tool, and the second user input device includes a second magnetic member and a second elastic member.

6. The power tool of claim 1, wherein the displacement sensed by the second sensor determines an output characteristic of the motor.

7. The power tool of claim 1, wherein the second axis on which the second user input device moves along is orthogonal to the first axis on which the first user input device moves along.

8. The power tool of claim 1, wherein a third sensor is positioned on the first side of the circuit board and adjacent to the first sensor, the third sensor is configured to sense the plurality of distinct positions of the first user input device.

9. The power tool of claim 1, wherein a third sensor is positioned on the first side of the circuit board adjacent to the second sensor, the third sensor configured to sense the displacement along the second axis of the second user input device.

10. The power tool of claim 9, wherein the third sensor generates a binary output based on the displacement of the second user input device along the second axis.

11. A power tool comprising:
a housing;
a motor at least partially disposed within the housing;
a first user input device partially disposed within the housing, the first user input device configured to be moved along a first axis to a plurality of distinct positions;
a second user input device partially disposed within the housing, the second user input device configured to be moved along a second axis;
a controller configured to control an operational characteristic of the motor, the controller mounted on a first circuit board; and
a second circuit board electrically connected to the first circuit board, the second circuit board includes a first sensor configured to sense the plurality of distinct positions of the first user input device and a second sensor configured to sense a displacement along the second axis of the second user input device.

12. The power tool of claim 11, wherein a third sensor is positioned on the second circuit board adjacent to the second sensor, the third sensor is configured to sense the displacement along the second axis of the second user input device.

13. The power tool of claim 12, wherein the third sensor generates a binary output based on the displacement of the second user input device along the second axis.
